# EUROPÄISCHE PATENTSCHRIFT

(11) **EP 3 128 622 B1**
(45) Veröffentlichungstag und Bekanntmachung des Hinweises auf die Patenterteilung: **29.04.2020**
(21) Anmeldenummer: 16182925.4
(22) Anmeldetag: 05.08.2016
(51) Int. Cl.: H01R 13/629, F21L 4/08, F21S 6/00, F21S 9/02, F21V 23/06, F21L 4/04, F21V 21/30, H01R 24/38

(54) **LEUCHTENANORDNUNG**
LIGHTING SYSTEM
SYSTEME D'ECLAIRAGE

(30) Priorität: 07.08.2015 DE 102015113065; 11.03.2016 DE 202016101368 U
(43) Veröffentlichungstag der Anmeldung: 08.02.2017
(73) Patentinhaber: Nimbus Group GmbH, 70469 Stuttgart (DE)
(72) Erfinder: Brennenstuhl, Dietrich, 70193 Stuttgart (DE)
(74) Vertreter: Kohler Schmid Möbus Patentanwälte

(56) Entgegenhaltungen:
- WO-A1-2006/053918
- WO-A1-2015/069053
- CN-U- 202 902 002
- JP-A- H06 333 677
- JP-A- 2004 273 307
- US-A- 6 160 355
- US-A1- 2006 262 525
- US-A1- 2010 039 792

## Beschreibung

Die vorgenannte Erfindung betrifft eine Leuchtenanordnung gemäß dem Oberbegriff von Anspruch 1.

Eine derartige Leuchtenanordnung ist beispielsweise durch die WO 2015/069053 A1 bekannt geworden.

Die Leuchtmittelanordnung beinhaltet vorzugsweise ein oder mehrere Leuchtmittel mit geringem Energieverbrauch, wie beispielsweise eine LED-Leuchtmittelanordnung. Die Leuchtmittelanordnung kann insbesondere in Form eines Arrays derartiger Leuchtmittel aufgebaut sein. Ferner beinhaltet die Leuchte einen Korpus, an dem die Leuchtmittelanordnung festgelegt ist.

Derartige Leuchtenanordnungen sind als Wand-, als Tisch-, als Decken- oder auch als Standleuchten bekannt, um einige Beispiele zu nennen. Die Leuchtmittelanordnung wird in der Regel elektrisch betrieben. Dabei ist es bekannt, die Leuchtmittelanordnung mit einem Stromnetz oder einer sonstigen Energiequelle zu verbinden. Hierzu können in dem Korpus geeignete elektrische Leitungen verlegt sein. Es ist jedoch auch bekannt, derartige Leuchtmittelanordnungen mit aufladbaren Akkumulatoren oder mit Batterien zu betreiben.

Aus der eingangs genannten WO 2015/069053 A1 ist ein Stromversorgungssystem mit einem elektronischen Gerät und einem Stromversorgungsgerät sowie mit einem Magnetverbinder bekannt. Die VCC- und die GND-Anschlüsse der beiden Geräte sind durch die magnetische Anziehung jeweils eines stromversorgungsgerätseitigen Magneten aneinander in Kontakt gehalten.

Aus US 2010/039792 A1 ist eine Beleuchtungsvorrichtung mit einem ersten elektrischen Kontakt, der Strom empfängt, und einem zweiten elektrischen Kontakt, der Zugang zu dem empfangenen externen Strom bietet, bekannt. Eine elektrische Kontaktträgerkomponente wird verwendet, um die Ausrichtung des ersten elektrischen Kontakts in Bezug auf den zweiten elektrischen Kontakt zu konfigurieren und den ersten elektrischen Kontakt und den zweiten elektrischen Kontakt zu verbinden. Ein Empfangsbereich eines tragbaren Beleuchtungsgerätes empfängt Strom und leitet diesen an das tragbare Beleuchtungsgerät. Eine Schnittstelle empfängt eine Eingabe, die eine erste Operation der empfangenen tragbaren Beleuchtungsvorrichtung angibt, wenn Strom verfügbar ist, und eine zweite Operation einer empfangenen tragbaren Beleuchtungsvorrichtung, wenn die Energie nicht verfügbar ist. Fig. 26 zeigt eine Leuchte, die auf der rechten Seite als Notfallleuchte für Netzspannungsausfälle konfiguriert ist. Die Leuchte weist ferner sowohl ein batteriegebundenes Nachtlicht, das nicht portabel ist, als auch ein Leuchtengehäuse mit Aufnahmen für eine Mehrzahl von portablen Leuchten auf.

Schließlich ist aus JP H06 333677 A noch ein in eine Leuchte integriertes Ladegerät bekannt. Mittels des Ladegeräts können eine in dem Gehäuse aufgenommene Sekundärbatterie und optional eine weitere Batterie in einem abnehmbaren Lampenteil geladen werden.

Vor diesem Hintergrund ist es eine Aufgabe der Erfindung, bei einer Leuchtenanordnung der eingangs genannten Art eine einfachere Bedienbarkeit bei zuverlässiger Zentrierung der Lampe auf einem Ladegerät bei gleichzeitig vorhandener Möglichkeit, die Lampe beliebig zu drehen, ohne einen Kontaktverlust hinnehmen zu müssen, zu erreichen.

Die obige Aufgabe wird durch eine Leuchtenanordnung mit den Merkmalen von Anspruch 1 gelöst

Die tragbare Leuchte kann dabei insbesondere eine Stehleuchte sein, kann jedoch auch eine Wandleuchte, eine Tischleuchte oder eine Deckenleuchte sein, um einige Beispiele zu nennen. An dem zu beleuchtenden Ort kann die tragbare Leuchte eine betriebliche Normallage bzw. Betriebsposition annehmen, die beispielsweise eine stehende Position ist, eine angelehnte, eine eingesteckte oder eine hängende Position ist. Der Ladevorgang kann in der betrieblichen Normallage erfolgen. Bevorzugt ist es in einer Variante jedoch, dass die tragbare Leuchte zum Durchführen eines Ladevorganges von der betrieblichen Normallage entfernt wird. Die betriebliche Normallage ist vorzugsweise eine solche Position, bei der kein Netzanschluss vorhanden ist, mittels dessen die tragbare Leuchte mit Energie versorgt werden könnte.

Die Leuchtmittelanordnung weist vorzugsweise eine Leistungsaufnahme auf, die kleiner ist als 15 Watt, insbesondere kleiner als 10 Watt. Ferner ist die Leuchtmittelanordnung vorzugsweise dazu ausgebildet, einen Lichtstrom in einem Bereich von 200 Im bis 2.000 Im zu erzeugen.

Der aufladbare Energiespeicher hat vorzugsweise eine Kapazität in einem Bereich von 2.000 mAh bis 20.000 mAh.

Die Ladeeinrichtung kann vorzugsweise an ein Stromnetz, wie ein 230 Volt-Netz angeschlossen werden, kann jedoch auch mit einer Photovoltaikanordnung als Energiequelle verbunden sein.

Die tragbare Leuchte weist vorzugsweise ein Gewicht in einem Bereich von 500 g bis 8.000 g auf, insbesondere in einem Bereich von 1.000 g bis 5.000 g. Ferner weist die Leuchte vorzugsweise Abmessungen wie herkömmliche Möbelleuchten auf.

Der Korpus der tragbaren Leuchte kann ein Gehäuse sein, dessen Wandungen zumindest teilweise lichtdurchlässig sein können. Der Korpus kann ein einteiliges starres Gehäuse sein, kann jedoch auch ein mehrteiliges Gehäuse sein. Insbesondere kann der Korpus einen Fuß beinhalten, der mit einem Grundkörper wie einem Arm oder dergleichen verbunden ist. Ferner kann der Korpus einen Kopf aufweisen, der beispielsweise mit einem Arm oder einer Stütze verbunden ist. Von besonderem Vorzug ist es, wenn ein Arm oder eine Stütze einer Stehleuchte starr mit einem Fuß verbunden ist, wobei an dem Arm oder der Stütze ein Kopf gelenkig angebracht sein kann, an dem die Leuchtmittelanordnung festgelegt ist.

An dem Korpus ist vorzugsweise ferner eine Schnittstelle der Schnittstellenanordnung vorgesehen. Die Schnittstelle an dem Korpus kann eine Standard-Schnittstelle sein, insbesondere eine Standard-Computerschnittstelle, wie eine USB-Schnittstelle, eine Mini-USB-Schnittstelle oder dergleichen. Derartige Standard-Schnittstellen beinhalten in der Regel wenigstens zwei Gleichstromkontakte zum Bereitstellen einer Gleichspannung, die zum Laden eines elektrischen Energiespeichers innerhalb des Korpus vorzugsweise unmittelbar verwendbar ist, beispielsweise eine Spannung in einem Bereich von 4 Volt bis 24 Volt, also eine Spannung, wie sie beispielsweise auch zum Laden von Akkus für Mobiltelefone verwendet wird.

Der aufladbare elektrische Energiespeicher der Leuchtenanordnung stellt vorzugsweise eine Gleichspannung in einem ähnlichen Größenbereich bereit, wobei diese Gleichspannung ggf. mittels einer in dem Korpus vorgesehenen Umsetzerschaltung auf eine Spannung umgesetzt wird, die für LED-Leuchtmittel geeignet ist, also insbesondere eine Spannung von 12 Volt oder eine Spannung von 24 Volt. In manchen Ausführungsformen kann der Energiespeicher eine derartige Spannung ausgangsseitig auch standardmäßig abgeben.

Ferner ist an dem Korpus vorzugsweise eine Schaltanordnung vorgesehen, mittels dessen die Leuchtmittelanordnung ein- und ausschaltbar ist. Vorzugsweise beinhaltet die Schaltanordnung eine Dimmeinrichtung, um die Leistungsaufnahme nach Bedarf einstellen zu können. Die Schaltanordnung kann einen berührungslosen Schalter mit oder ohne Dimmer beinhalten.

Die Leuchtenanordnung kann eine einzelne tragbare Leuchte beinhalten, kann jedoch auch eine Mehrzahl von tragbaren Leuchten beinhalten.

Bei der erfindungsgemäßen Leuchte ist es möglich, an dem Korpus eine Ladeschnittstelle zum Laden eines anderen Mobilgerätes bereitzustellen, beispielsweise eines Smartphones oder eines sonstigen USB-Gerätes. Hierdurch kann eine Kapazität des Energiespeichers der Leuchte dazu verwendet werden, ein anderes elektronisches Gerät aufzuladen. Sofern der Ladezustand einen bestimmten Schwellenwert unterschreitet, kann diese Funktion vorzugsweise aus Eigenschutzgründen des Energiespeichers abgeschaltet werden.

Insgesamt wird folglich ein neuartiges Leuchtenkonzept bereitgestellt, bei dem es möglich ist, eine Leuchte, die im Bereich einer Ladeeinrichtung bereitsteht und in der Regel voll aufgeladen ist, bedarfsweise zu ergreifen, dabei von der Ladeeinrichtung zu trennen, und anschließend zu einem beliebigen Ort zu tragen, an dem eine Beleuchtung gewünscht wird. Dies ermöglicht zum einen eine unbegrenzte Flexibilität hinsichtlich der Beleuchtung an unterschiedlichsten Orten. Zum anderen kann eine Lichtplanung von vornherein so ausgeführt werden, dass nicht überall Steckdosen für Leuchten vorgesehen werden müssen. Andererseits kann es in Räumlichkeiten bzw. Orten, bei denen keine Steckdosen vorhanden sind, dennoch möglich sein, für eine Beleuchtung zu sorgen.

Bei den oben beschriebenen elektrischen Parametern von Kapazität für den Energiespeicher und Energieverbrauch der Leuchtmittelanordnung ist es möglich, ohne nachzuladen mehrere Stunden für eine hinreichende Beleuchtung für die unterschiedlichsten Tätigkeiten zu sorgen. Die Leuchtdauer bei voller Lichtleistung liegt vorzugsweise in einem Bereich von einer halben Stunde bis zu einer Woche, insbesondere in einem Bereich von zwei Stunden bis zehn Stunden. Der Energiespeicher basiert vorzugsweise auf verfügbaren Akkumulatortechnologien wie Lithium-Ionen-Akkumulatoren oder dergleichen. Eine tragbare Leuchte kann beispielsweise einen oder mehrere Akkumulatoren verwenden, wie sie auch in modernen Mobiltelefonen oder dergleichen verwendet werden. In einer Variante ist der Energiespeicher fest in den Korpus der Leuchte integriert. In einer alternativen bevorzugten Ausgestaltung ist ein von einem Benutzer zu öffnendes Fach vorgesehen, innerhalb dessen der oder die Energiespeicher aufgenommen sind, so dass ein Benutzer den Energiespeicher selbstständig austauschen kann. Der Energiespeicher kann beispielsweise ein LiPO-Akku sein, der vorzugsweise mit Schutzschaltung und Gehäuse versehen ist. Das Fach zur Aufnahme des Energiespeichers kann vorzugsweise an der Unterseite eines Fußes der Leuchte vorgesehen sein.

An dem Korpus der Leuchte kann beispielsweise eine USB- oder ein USB-Mikro-Buchse ausgebildet sein, die mit dem Energiespeicher verbunden ist, um diesen aufzuladen. Alternativ oder zusätzlich kann eine Ladestation vorgesehen sein, die einen Adapter von USB oder Mini-USB auf eine Magnetkontaktanordnung beinhaltet. Eine solche Ladestation kann beispielsweise eine USB-Buchse oder eine Mini-USB-Buchse beinhalten, in die ein herkömmliches USB- bzw. Mini-USB-Kabel eingesteckt wird, beispielsweise an einem Ladeeinrichtungsgehäuse, das eine solche Ladestation bilden kann. Der Magnetkontakt kann beispielsweise eine selbstständige Verbindung mit entsprechenden Kontakten an einem Fuß der Leuchte herstellen, wenn die Ladestation sich dem Leuchtenfuß nähert (oder umgekehrt). Die Magnetverbindung soll dabei so ausreichend stark sein, dass die Leuchte positioniert werden kann, ohne dass eine Trennung erfolgt (innerhalb der Kabellänge des angeschlossenen USB-Kabels). Zum Lösen der Verbindung kann der Nutzer mit seinem Fuß auf das überstehende Ende der Ladestation treten, um diese am Boden zu fixieren, während er die Leuchte aus der Magnetkopplung löst.

Generell ist es denkbar, die Schnittstellenanordnung zwischen dem Energiespeicher und der Ladeeinrichtung als herkömmliche elektrische Steckverbindung zu realisieren.

Von besonderem Vorzug ist es jedoch, wenn die Ladeeinrichtung und der Energiespeicher mittels einer induktiven Schnittstellenanordnung koppelbar sind, derart, dass der Energiespeicher induktiv ladbar ist.

Bei dieser Ausführungsform kann eine Kopplung und eine Entkopplung zwischen Ladeeinrichtung und Energiespeicher bzw. Lampe erfolgen, ohne dass es notwendig ist, mechanische Steckverbindungen einzurichten oder zu lösen.

Beispielsweise kann eine induktive Ladestation als flache Baugruppe ausgebildet werden, die auf einem Fußboden angeordnet wird. Eine derartige flache induktive Ladeeinrichtung kann beispielsweise auch in einen Fußboden integriert werden, beispielsweise anstelle einer Fliese oder dergleichen, oder kann unterhalb eines nicht leitenden Fußbodens wie eines Holzfußbodens oder dergleichen angeordnet werden.

Von besonderem Vorzug ist es hierbei, wenn die induktive Ladeeinrichtung eine Spule aufweist, die flach ausgebildet ist und die innerhalb eines Ladeeinrichtungsgehäuses im Wesentlichen parallel zu einer Horizontalen ausgerichtet ist. In entsprechender Weise kann an dem Korpus der Leuchte, beispielsweise im Bereich eines Fußes oder dergleichen, eine entsprechende induktive Ladespule angeordnet sein, die vorzugsweise in einer Ladeposition der Leuchte ebenfalls horizontal ausgerichtet ist.

Gemäß einer weiteren Ausführungsform beinhaltet die Schnittstellenanordnung - alternativ oder zusätzlich - eine elektrische Verbindungsanordnung, wobei die Verbindungsanordnung magnetisch in einer Verbindungsposition gehalten wird, so dass ein Trennen der Verbindungsanordnung erleichtert ist.

Bei dieser Ausführungsform kann die elektrische Verbindung zwischen Ladeeinrichtung und Leuchte so realisiert werden, dass die elektrische Kontaktierung dadurch erfolgt, dass die Schnittstellenelemente von Ladeeinrichtung einerseits und Leuchte andererseits magnetisch angezogen werden. Falls die Leuchte und die Ladeeinrichtung gewaltsam voneinander getrennt werden, erfolgt dies auf erleichterte Art und Weise, indem die magnetische Anziehungskraft überwunden wird. Schäden im Bereich der Schnittstellenanordnung aufgrund eines solchen gewaltsamen Trennens, wie sie beispielsweise bei mechanischen Steckverbindungen auftreten könnten, werden hierdurch vermieden.

Gemäß einer weiteren bevorzugten Ausführungsform beinhaltet die Leuchtenanordnung eine Mehrzahl von tragbaren Leuchten, die jeweils eine Steueranordnung aufweisen, wobei die Steueranordnungen jeweils eine drahtlose Kommunikationseinrichtung beinhalten, wobei die Kommunikationseinrichtungen von wenigstens zwei Leuchten so miteinander kommunizieren können, dass die Leuchten gemeinsam geschaltet werden können.

Mit anderen Worten können bei dieser Ausführungsform eine Mehrzahl von derartigen Leuchten synchron miteinander geschaltet werden. Der Begriff des Schaltens soll vorliegend insbesondere ein Ein- und Ausschalten beinhalten, kann jedoch auch ein Dimmen beinhalten.

Hierbei kann es vorteilhaft sein, wenn eine Bedienung an einer der Leuchten erfolgt, wobei die anderen Leuchten dann synchron hierzu geschaltet werden. Alternativ ist es auch denkbar, mehrere Leuchten mittels einer Steueranordnung zu schalten, wie beispielsweise eine Fernbedienung, ein Mobiltelefon, ein Tablet-Computer oder dergleichen. Hierbei ist es denkbar, dass eine Verbindung zwischen einer derartigen Steueranordnung und einer der tragbaren Leuchten eingerichtet wird, um dann eine Mehrzahl von Leuchten synchron zu schalten.

Die drahtlose Kommunikationseinrichtung kann ein Infrarot- oder ein Funknetzwerk sein. Der Übertragungsstandard kann beispielsweise ein LAN-Standard sein, ein Bluetooth-Standard, Zigbee, NFC oder dergleichen.

Wenn eine Leuchte einen Korpus mit einem Fuß aufweist, an dem Leuchten-Kontakte einer Schnittstellenanordnung zum Laden eines integrierten Energiespeichers vorgesehen sind, so können derartige Leuchten-Kontakte an einer Seite vorgesehen sein, derart, dass eine Verbindungsachse einer elektrischen Verbindungsanordnung eine Verbindungsachse aufweist, die parallel zu einer Horizontalen, insbesondere parallel zu einer Lagerebene ausgerichtet ist. Die Lagerebene kann eine Ebene parallel zu einem Boden bei einer Stehleuchte oder eine Ebene parallel zu einer Wand bei einer Wandleuchte sein. Vorzugsweise ist die Lagerebene eine Ebene, die parallel zu einer Grundfläche eines Fußes einer Stehleuchte ausgebildet ist.

Von besonderem Vorzug ist es, wenn der Korpus der Leuchte eine solche Lagerebene definiert und wenn die Schnittstellenanordnung eine elektrische Verbindungsanordnung mit einer Verbindungsachse aufweist, die quer zu der Lagerebene ausgerichtet ist.

Für den Fall eines Fußes einer Stehleuchte ist die Verbindungsachse folglich nicht horizontal ausgerichtet, sondern quer hierzu, insbesondere senkrecht hierzu.

Die Verbindungsachse ist dabei vorzugsweise jene Achse, entlang der Kontakte der elektrischen Verbindungsanordnung von Ladeeinrichtung einerseits und Korpus der Leuchte andererseits aufeinander zu bewegt werden oder miteinander ausgerichtet sind.

Die Ausgestaltung einer elektrischen Verbindungsanordnung mit einer Verbindungsachse, die quer zu der Lagerebene ausgerichtet ist, ermöglicht bei einer Ausbildung der Leuchten-Kontakte an einem Fuß einer Stehleuchte, dass die Verbindungsachse senkrecht verläuft. Dabei kann die Leuchte zum Lösen der elektrischen Verbindungsanordnung im Wesentlichen quer zur Horizontalen bewegt werden. Dies kann mit einer Ausgestaltung kombiniert werden, wie sie nachstehend beschrieben ist, wobei eine Ladeeinrichtung ein Gehäuse aufweist, das eine Fußstellfläche auf seiner Oberseite aufweist und dessen Lade-Schnittstelle ebenfalls an der Oberseite ausgebildet ist, um auf diese Weise eine im Wesentlichen senkrechte Verbindungsachse einzurichten.

Gemäß einer bevorzugten Ausführungsform weist hierbei der Korpus der Leuchte eine Ausnehmung auf, in die zumindest ein Abschnitt eines Ladeeinrichtungsgehäuses einführbar ist, wobei die Form der Ausnehmung und die Form des Ladeeinrichtungsgehäuses so aufeinander abgestimmt sind, dass das Ladeeinrichtungsgehäuse gegenüber dem Korpus der Leuchte parallel zu der Lagerebene um einen Winkel verschwenkbar ist, der in einem Bereich von 10° bis 90° liegt.

Bevorzugt liegt der Winkel in einem Bereich von 15° bis 45°, insbesondere von 20° bis 35°.

Die Verschwenkbarkeit kann dabei insbesondere um die oben genannte Verbindungsachse herum erfolgen.

Dies hat insbesondere bei dem Vorgang des Ankoppelns des Korpus der Leuchte an das Ladeeinrichtungsgehäuse Vorteile. Das Ladeeinrichtungsgehäuse kann dabei beispielsweise auf einem Fußboden liegen. Durch den relativ großen Verschwenkwinkel ist es möglich, den Korpus der Leuchte in unterschiedlichen Winkelpositionen auf das Ladeeinrichtungsgehäuse zu zubewegen, um den Koppelvorgang durchzuführen.

Die Ausnehmung an dem Korpus weist vorzugsweise eine Einführungsschräge auf, die den oben genannten Winkel definiert.

Bei dieser Ausgestaltung ist es ferner vorteilhaft, wenn die Schnittstellenanordnung eine magnetische Halteeinrichtung bzw. Koppeleinrichtung beinhaltet, so dass die elektrische Verbindungsanordnung im Wesentlichen selbsttätig elektrisch gekoppelt wird, sobald sich der Korpus dem Ladeeinrichtungsgehäuse nähert.

Die Ausnehmung ist dabei vorzugsweise an einer Unterseite eines Fußes des Korpus der Leuchte ausgebildet, derart, dass die Leuchte nicht nur seitlich an das Ladeeinrichtungsgehäuse angenähert werden kann, um den Koppelvorgang durchzuführen. Vielmehr ist es auch möglich, den Fuß von oben auf das Ladeeinrichtungsgehäuse aufzusetzen, wobei der Koppelvorgang wiederum vorzugsweise über magnetische Koppelmittel erfolgt, durch die Lade-Kontakte an dem Ladeanordnungsgehäuse und Leuchten-Kontakte an dem Korpus elektrisch miteinander kontaktiert werden.

Diese Magnetverbindung ist dabei vorzugsweise, wie oben erwähnt ausreichend stark, so dass die Leuchte positioniert werden kann, ohne dass eine Trennung erfolgt, es sei denn, ein Benutzer stellt einen Fuß auf das Ladeeinrichtungsgehäuse oder der Benutzer entfernt die Leuchte über die Kabellänge eines angeschlossenen Kabels hinaus von einem Netzstecker, an den die Ladeeinrichtung angeschlossen ist. In diesem Fall wird die Magnetkopplung bzw. Magnetverbindung zwangsweise gelöst, was jedoch ohne Beschädigung der Schnittstellenanordnung erfolgen kann.

Ferner kann es bevorzugt sein, wenn die Ausnehmung einen Ausnehmungskonus aufweist, der vorzugsweise konzentrisch zu der Verbindungsachse ausgerichtet ist. In diesem Fall ist es ebenfalls bevorzugt, wenn an dem Ladeeinrichtungsgehäuse ein Gehäusekonus vorgesehen ist, der ebenfalls konzentrisch zu der Verbindungsachse ausgerichtet ist. Mit anderen Worten sind die Konen von Ausnehmung einerseits bzw. Ladeeinrichtungsgehäuse andererseits jeweils konzentrisch zu einer jeweiligen elektrischen Kontaktanordnung angeordnet.

Folglich ist es bevorzugt, wenn die elektrische Verbindungsanordnung zwei konzentrische Leuchten-Kontakte an dem Korpus der Leuchte sowie zwei entsprechende konzentrische Lade-Kontakte an dem Ladeeinrichtungsgehäuse aufweist.

Die Lade-Kontakte sind vorzugsweise an einer Oberseite des Ladeeinrichtungsgehäuses vorgesehen. Ferner sind die Leuchten-Kontakte vorzugsweise an einer Oberseite bzw. Decke der Ausnehmung vorgesehen, die vorzugsweise zur Unterseite hin offen ausgestaltet ist.

Weiterhin ist es bevorzugt, wenn die Ladeeinrichtung so ausgestattet ist, dass an dem Ladeeinrichtungsgehäuse eine Standard-Schnittstelle ausgebildet ist, über die eine elektrische Ladegleichspannung bereitstellbar ist, wobei die elektrische Standard-Schnittstelle in dem Ladeeinrichtungsgehäuse elektrisch mit Lade-Kontakten an der Außenseite des Ladeeinrichtungsgehäuses verbunden ist, insbesondere an dessen Oberseite, wobei die Lade-Kontakte mit Leuchten-Kontakten an einem Korpus einer Leuchte elektrisch verbindbar sind.

Zum Laden kann alternativ ein herkömmliches USB-Ladegerät verwendet werden, wozu in diesem Fall an dem Korpus der Leuchte vorzugsweise eine USB-Mini- bzw. USB-Mikrobuchse vorgesehen ist.

Wie oben erläutert, ist das Bereitstellen eines Ladeeinrichtungsgehäuses in Form eines Docks vorzugsweise dann vorgesehen, wenn es sich bei der Leuchte um eine Stehleuchte handelt. In allen anderen Fällen ist es generell bevorzugt, wenn an dem Korpus eine Standard-Schnittstelle, wie eine USB-Buchse, vorgesehen ist.

Gemäß einer weiteren bevorzugten Ausführungsform, die unabhängig unter Schutz gestellt werden soll, beinhaltet eine Ladeeinrichtung eine Ladestation, an der eine Mehrzahl von Leuchten temporär festlegbar ist und die eine der Mehrzahl von Leuchten entsprechende Mehrzahl von Schnittstellen zum gleichzeitigen Aufladen der an der Ladestation festgelegten Leuchten aufweist.

Der Grundgedanke einer solchen Ladeeinrichtung mit einer Ladestation besteht folglich darin, eine Mehrzahl von Leuchten gleichzeitig laden zu können. Die Ladestation weist dabei vorzugsweise eine Mehrzahl von Leuchtenaufnahmen auf, die vorzugsweise jeweils identisch ausgebildet sind, um identische Typen von Leuchten aufnehmen zu können. Alternativ können an der Ladestation jedoch auch unterschiedliche Leuchtenaufnahmen zur Aufnahme von unterschiedlichen Typen von Leuchten vorgesehen sein.

Die Ladestation weist vorzugsweise einen Sockel auf, mit dem die Ladestation auf einer horizontalen Fläche aufstellbar ist. Ferner beinhaltet die Ladestation eine Energieversorgungsschnittstelle, über die Ladeenergie zugeführt werden kann. Zwar ist es denkbar, dass in der Ladestation selber, beispielsweise in einem Sockel hiervon, ein Konverter zum Umsetzen einer Netzspannung in eine Lade-Gleichspannung enthalten ist. Vorzugsweise ist an einem Gehäuse der Ladestation, beispielsweise an dem Sockel, jedoch eine Ladeschnittstelle vorgesehen, die mit einer in der Ladestation vorgesehenen Verkabelung mit der Mehrzahl von Schnittstellen zu gleichzeitigen Laden von einer Mehrzahl von Leuchten verbunden ist.

In diesem Fall kann die zentrale Lade-Schnittstelle an der Ladestation entweder eine Standard-Schnittstelle, wie eine USB-Buchse sein. Alternativ hierzu kann an der Ladestation eine Ausnehmung vorgesehen sein, in die zumindest ein Abschnitt eines Ladeeinrichtungsgehäuses einführbar ist, wie es oben dem Grunde nach in ähnlicher Form für den Fuß einer besonderen Ausführungsform einer erfindungsgemäßen Leuchte beschrieben worden ist.

Ein derartiges Ladeeinrichtungsgehäuse kann identisch ausgebildet sein, wie es oben beschrieben ist, nämlich mit konzentrischen Lade-Kontakten, die mit konzentrischen "Leuchten"-Kontakten an der Ladestation elektrisch verbindbar sind. Das Ladeeinrichtungsgehäuse kann wiederum so ausgebildet sein, dass an einer Oberseite hiervon eine Fußstellfläche oder Handhaltefläche oder dergleichen ausgebildet ist, so dass das Ladeeinrichtungsgehäuse mit dem von der Ausnehmung der Ladestation überstehenden Teil festgehalten werden kann, um eine Magnetkopplung zwischen dem Ladeeinrichtungsgehäuse und der Ladestation zu trennen.

Das Ladeeinrichtungsgehäuse kann ferner eine Standard-Schnittstelle in Form einer USB-Schnittstelle oder dergleichen aufweisen, über die das Ladeeinrichtungsgehäuse mit einem Standard-Ladekonverter verbindbar ist. In diesem Fall ist in dem Ladeeinrichtungsgehäuse ebenfalls kein eigener Konverter vorgesehen, sondern lediglich eine elektrische Verkabelung zwischen der Standard-Schnittstelle und den Lade-Kontakten.

Das Ladeeinrichtungsgehäuse kann folglich sowohl zum Aufladen einer Leuchte verwendet werden, die einen Fuß aufweist, an dessen Unterseite eine Ausnehmung zum Aufnehmen eines Abschnittes des Ladeeinrichtungsgehäuses vorgesehen ist. Das Ladeeinrichtungsgehäuse kann jedoch auch zum Aufladen einer Mehrzahl von Leuchten verwendet werden, die in einer Ladestation der oben beschriebenen Art temporär festgelegt sind. Die Ladestation ist vorzugsweise so ausgebildet, dass sie einen Sockel aufweist, an dem wenigstens zwei, vorzugsweise vier oder mehr Leuchtenaufnahmen für eine entsprechende Anzahl von Leuchten vorgesehen ist. Bei den Leuchten handelt es sich vorzugsweise um Leuchten, bei denen eine Leuchtplatte sich schräg von einem Korpus erstreckt. Die Leuchtenaufnahmen können dabei zur Aufnahme der entsprechenden Korpusse dieser Leuchten vorgesehen sein. Vorzugsweise sind die Aufnahmen dabei so angeordnet, dass jeweils zwei Leuchten mit ihren Korpussen unmittelbar aneinander liegend aufgenommen werden können, derart, dass sich ihre Leuchtplatten in entgegengesetzte Richtungen erstrecken.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer erfindungsgemäßen Leuchtenanordnung;
- Fig. 2: schematische Darstellungen weiterer Leuchtenanordnungen in einem Gebäude;
- Fig. 3: eine weitere Ausführungsform einer erfindungsgemäßen Leuchtenanordnung in einer Ladeposition und in einer Beleuchtungsposition;
- Fig. 4: eine der Fig. 3 vergleichbare Darstellung einer weiteren Ausführungsform einer erfindungsgemäßen Leuchte;
- Fig. 5: eine Detailansicht der Leuchte der Fig. 4;
- Fig. 6: eine schematische Darstellung einer weiteren Ausführungsform einer erfindungsgemäßen Leuchtenanordnung;
- Fig. 7: eine Draufsicht auf eine Ladeeinrichtung der Leuchtenanordnung der Fig. 6;
- Fig. 8: eine schematische Darstellung einer Steueranordnung einer erfindungsgemäßen Leuchte;
- Fig. 9: eine perspektivische Darstellung einer weiteren Ausführungsform einer erfindungsgemäßen Leuchte;
- Fig. 10: eine perspektivische Darstellung der Leuchte der Fig. 9 von unten;
- Fig. 11: eine schematische Darstellung einer Schnittstellenanordnung mit vertikaler Verbindungsachse für eine Ausführungsform einer erfindungsgemäßen Leuchtenanordnung, und zwar von schräg oben;
- Fig. 12: eine der Fig. 11 vergleichbare Darstellung von schräg unten;
- Fig. 13: eine Darstellung der Schnittstellenanordnung von unten vor einer Kopplung von Ladeeinrichtungsgehäuse und Korpus;
- Fig. 14: eine der Fig. 13 vergleichbare Darstellung nach Herstellung der Kopplung;
- Fig. 15: eine schematische perspektivische Ansicht eines Ladeeinrichtungsgehäuses gemäß einer weiteren Ausführungsform;
- Fig. 16: das Ladeeinrichtungsgehäuse der Fig. 15 von oben;
- Fig. 17: eine perspektivische Darstellung einer weiteren Ausführungsform einer erfindungsgemäßen Leuchte von schräg vorne;
- Fig. 18: eine perspektivische Darstellung der Leuchte der Fig. 17 von schräg hinten;
- Fig. 19: ein Bediengerät für erfindungsgemäßen Leuchte;
- Fig. 20: eine perspektivische Ansicht einer weiteren Ausführungsform einer erfindungsgemäßen Leuchte in Form einer Pendelleuchte;
- Fig. 21: eine schematische Darstellung eines Magnetbefestigungsteils für magnetische Haltemittel von vorne;
- Fig. 22: das Magnetbefestigungsteil der Fig. 21 in einer Schnittansicht;
- Fig. 23: eine schematische Darstellung einer Leuchtplatte und eines Lichteinkoppelabschnittes für die in den Fig. 17, 18 und 20 gezeigten Leuchten;
- Fig. 24: eine Leuchtenanordnung mit mehreren Leuchten und einem zentralen Bediengerät;
- Fig. 25: eine weitere Ausführungsform einer erfindungsgemäßen Ladeeinrichtung mit einer Ladestation zum Aufladen einer Mehrzahl von Leuchten.

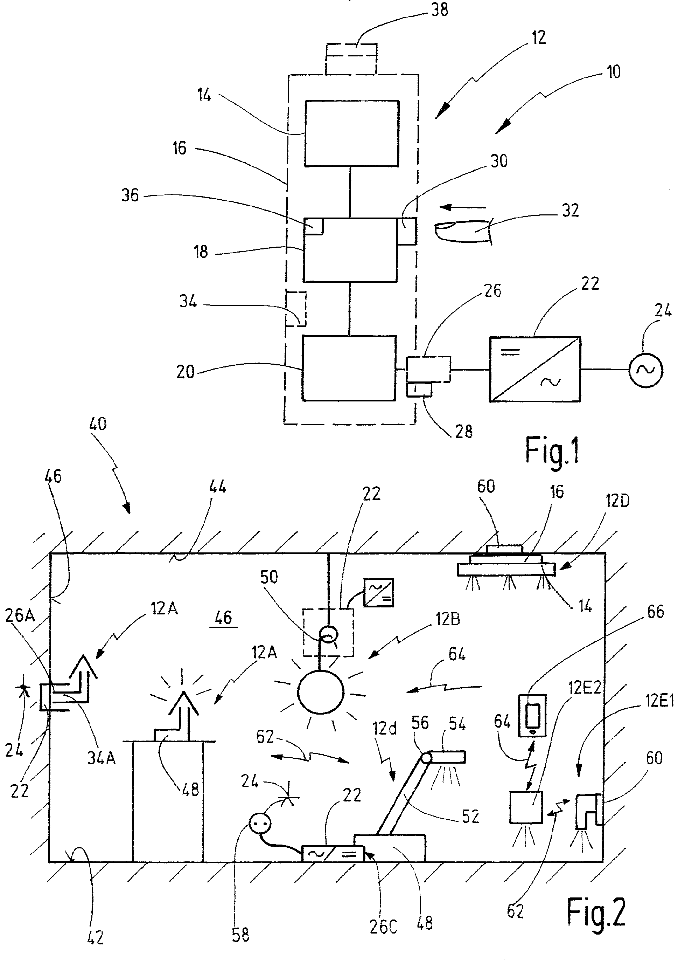

In Fig. 1 ist eine Leuchtenanordnung schematisch dargestellt und generell mit 10 bezeichnet. Die Leuchtenanordnung 10 beinhaltet eine Leuchte 12. Die Leuchte 12 weist eine Leuchtmittelanordnung 14 auf, die Glühlampen-basiert oder Halogenbasiert sein kann, jedoch insbesondere als LED-Leuchtmittelanordnung ausgebildet ist, insbesondere in Form eines Arrays aus mehreren einzelnen LEDs.

Ferner weist die Leuchte 12 einen Korpus 16 auf, der einteilig oder mehrteilig ausgebildet sein kann. Der Korpus 16 kann ein Gehäuse sein, kann eine Anordnung aus Fuß, Stütze und Kopf sein, kann jedoch auch eine lichtdurchlässige, opaque oder sonst wie streuende Oberfläche beinhalten. In manchen Fällen kann der Korpus eine geschlossene Hülle aus einem lichtdurchlässigen oder lichtstreuenden Material sein. In anderen Varianten kann der Korpus ein nicht lichtdurchlässiges Gehäuse sein, das beispielsweise einen Schlitz oder eine sonstige Öffnung zum Austritt von Licht der Leuchtmittelanordnung 14 beinhaltet. In vielen Fällen kann die Leuchtmittelanordnung 14 ein flaches Element aus einem lichtstreuenden Kunststoffmaterial beinhalten, das mit Löchern, beispielsweise mit Kegelsenkung, für jede LED eines LED-Arrays ausgestattet ist. Die Rückseite einer derartigen Kunststoff- oder Glasanordnung kann durch ein Gehäuse abgedeckt sein, das die Rückseite der LED-Array-Anordnung abdeckt und gegebenenfalls eine dieser Anordnung zugeordnete Steuerelektronik.

Beispiele für derartige Leuchten finden sich auf der Website www.nimbus-lighting.com.

Die Leuchte 12 beinhaltet ferner eine Steueranordnung 18, die dazu ausgebildet ist, die Leuchtmittelanordnung 14 anzusteuern. Ferner weist die Leuchte 12 einen elektrischen Energiespeicher 20 auf, der fest mit dem Korpus 16 verbunden ist, insbesondere in einem Gehäuseabschnitt des Korpus aufgenommen ist. Von besonderem Vorzug ist es, wenn der elektrische Energiespeicher 20, der beispielsweise als Akkumulator ausgebildet sein kann und folglich aufladbar sein kann, in einem Fuß der Leuchte 12 aufgenommen ist.

Die Leuchtenanordnung 10 weist ferner eine Ladeeinrichtung 22 auf, die Energie von einer Energiequelle 24, beispielsweise ein Stromnetz 24, in eine geeignete Gleichspannung zum Laden des elektrischen Energiespeichers 20 und/oder zum Versorgen der Leuchtmittelanordnung 14 mit Strom umwandelt.

Zur Verbindung der Ladeeinrichtung 22 mit der Leuchte 12 dient eine Schnittstellenanordnung 26. Die Schnittstellenanordnung 26 kann eine elektrische Verbindungseinrichtung beinhalten, beispielsweise eine mechanische Steckverbindereinrichtung. Die Schnittstellenanordnung 26 kann jedoch auch eine induktive Schnittstellenanordnung sein. Ferner kann der Schnittstellenanordnung 26 eine Magnetanordnung 28 zugeordnet sein, die dazu dient, Schnittstellenelemente der Leuchte 12 bzw. der Ladeeinrichtung 22 elektrisch aufgrund magnetischer Anziehung miteinander zu kontaktieren, so dass ein Lösen der Schnittstellenanordnung 26 bzw. Auftrennen der Schnittstellenanordnung 26 erleichtert sein kann.

Die Steueranordnung 18 weist eine Schaltanordnung 30 auf, die vorzugsweise mittels eines Bedienobjektes 32 wie eines Fingers bedienbar ist. Die Schaltanordnung 30 kann eine mechanische Schalteinrichtung sein, kann jedoch auch eine kapazitive Schalteinrichtung sein, eine berührungslose Schalteinrichtung mit Reflex-Lichtschranke oder dergleichen. Die Schaltanordnung 30 kann beispielsweise in einen Kopf des Korpus 16 der Leuchte 12 integriert sein.

Die Leuchte 12 beinhaltet ferner einen Lager- bzw. Halteabschnitt 34, mittels dessen die Leuchte 12 an einem zu beleuchtenden Ort gelagert bzw. gehalten werden kann. Im einfachsten Fall kann der Lager- bzw. Halteabschnitt 34 ein Fuß sein, mittels dessen die Leuchte 12 auf einen Boden gestellt wird. Der Lager-/Halteabschnitt 34 kann jedoch auch ein Magnetabschnitt sein, ein Haken oder dergleichen.

In manchen Ausführungsformen beinhaltet die Steueranordnung 18 eine Kommunikationseinrichtung 36, mittels der die Leuchte 12 mit einer anderen Leuchte 12 in Kommunikationsverbindung treten kann, um die Leuchten synchronisiert zu schalten. Die Kommunikationseinrichtung 36 kann jedoch auch dazu ausgelegt sein, mit einem Bediengerät verbunden zu werden, beispielsweise einer Fernbedienung, einem Mobiltelefon, einem Tablet-Computer, etc. Die Kommunikationseinrichtung 36 ist vorzugsweise eine drahtlose Kommunikationseinrichtung, basierend beispielsweise auf einem der Standards WLAN, Bluetooth, Zigbee, NFC, etc.

Schließlich kann die Leuchte 12 einen Griff 38 beinhalten, mittels dessen die Leuchte 12 getragen werden kann, und zwar zu einem zu beleuchtenden Ort, wobei die Leuchte 12 zu diesem Zweck vorzugsweise vorab von der Ladeeinrichtung 22 getrennt wird, derart, dass die Leuchtmittelanordnung 14 ausschließlich aus dem elektrischen Energiespeicher 20 mit Energie versorgt wird.

In Fig. 2 sind unterschiedliche Arten von Leuchten bzw. Leuchtenanordnungen dargestellt, und zwar in Bezug auf ein Gebäude 40, das einen Boden 42, eine Decke 44 sowie wenigstens eine senkrecht stehende Wand 46 beinhaltet.

So zeigt Fig. 2 eine Wandleuchte 12A mit einem Lager-/Halteabschnitt 34A, mittels dessen die Leuchte 12A mit einer Schnittstellenanordnung 26A in einem Bereich der Wand 46 verbunden werden kann, wobei in die Wand eine Ladeeinrichtung 22 integriert sein kann, die mit einer Energiequelle 24 wie einem Stromnetz verbunden ist. In diesem Fall kann die Wandleuchte 12A beispielsweise an einem senkrecht stehenden Teil eines Korpus ergriffen und von der Schnittstellenanordnung 30 getrennt werden, um dann beispielsweise mittels eines Fußes 48 auf einen Tisch gesetzt zu werden, um im Bereich des Tisches eine Beleuchtungsfunktion unabhängig vom Stromnetz durchführen zu können.

Eine alternative Ausführungsform einer Leuchte 12B weist beispielsweise einen lichtdurchlässigen oder lichtstreuenden Korpus auf sowie einen Haken 50, der einen Lager- bzw. Halteabschnitt bildet und beispielsweise mit einer Hakenöse verbindbar ist, die von einer Decke 44 hängt. Mit einem solchen Haken 50 kann die Leuchte 12B, die in diesem Fall als Deckenleuchte ausgebildet ist, auch an anderen Orten aufgehängt werden, beispielsweise auch im Garten, auf einer Terrasse oder Ähnliches. Im Bereich der Hakenöse kann hierbei ebenfalls eine Ladeeinrichtung 22 vorgesehen sein, mittels der ein in der Leuchte 12B enthaltener Energiespeicher geladen werden kann.

Bei 12C ist eine weitere Leuchte in Form einer Stehleuchte gezeigt. Die Stehleuchte 12C weist einen Fuß 48 auf, von dem ein stab- bzw. stützenförmiger Grundkörper 52 nach oben vorsteht. Der Grundkörper 52 kann geneigt zu einer Horizontalen ausgerichtet sein, wie es in Fig. 2 schematisch dargestellt ist. An einem freien Ende des Grundkörpers 52 kann ein Kopf 54 gelagert sein, und zwar beispielsweise über ein Gelenk 56, das als einfaches Gelenk, oder als Mehrfachgelenk ausgebildet sein kann. Eine Leuchtmittelanordnung 14 kann in diesem Fall in den Kopf 54 integriert sein, wie es in Fig. 2 schematisch dargestellt ist.

Es ist zu erkennen, dass im Bereich des Fußes eine Schnittstellenanordnung 26C ausgebildet ist, um die Leuchte 12C mit einer Ladeeinrichtung 22 zu verbinden, die beispielsweise ein flaches Gehäuse aufweist und auf dem Boden 42 abgelegt ist. Die Ladeeinrichtung 22 kann über ein nicht näher dargestelltes Kabel mit einer Steckdose 58 einer Energiequelle 24 verbunden sein.

Bei 12D ist eine Deckenleuchte gezeigt, die eine flächige Leuchtmittelanordnung 14 beinhaltet, an deren Rückseite ein Korpus 16 ausgebildet ist. Der Korpus 16 kann in diesem Fall mit einem Magneten 60 zusammenwirken, der an der Decke 44 befestigt ist. Demzufolge kann die Deckenleuchte 12D nach einem Ladevorgang an einer nicht dargestellten Ladestation beispielsweise oben an der Decke 44 befestigt werden, und zwar mittels des Magneten 60, der in diesem Fall als Lager- bzw. Halteabschnitt dient.

Ein ähnliches Konzept ist für eine Bodenaufhellungsleuchte 12E1 gezeigt, die mittels eines Magneten 60 in einem dem Boden 42 nahen Bereich einer Wand 46 mittels eines Magneten 60 befestigbar ist.

In Fig. 2 ist neben der Leuchte 12E1 eine weitere Leuchte 12E2 an einer weiteren Wand dargestellt, wobei die Leuchten 12E1 und 12E2 vorzugsweise identisch aufgebaut sind. Die Leuchten 12E1, 12E2 können jeweils zur Bodenaufhellung dienen, beispielsweise im Bereich von Treppen oder dergleichen. In einer bevorzugten Variante können die Leuchten 12E1, 12E2 über nicht näher bezeichnete Kommunikationseinrichtungen drahtlos miteinander kommunizieren, wie es in Fig. 2 schematisch bei 62 gezeigt ist. Hierdurch können die Leuchten 12E1, 12E2 jeweils synchron geschaltet werden, beispielsweise ein- und ausgeschaltet werden oder gedimmt werden.

Bei 66 ist ein Bediengerät gezeigt, das als Fernbedienung, als Mobiltelefon, als Tablet-Computer etc. ausgebildet sein kann. Eine Kommunikation zwischen dem Bediengerät 66 und wenigstens einer Leuchten 12E1, 12E2 ist bei 64 dargestellt. Das Bediengerät 66 kann jedoch auch dazu ausgebildet sein, sämtliche Leuchten 12E1, 12E2 parallel anzusteuern und parallel zu schalten.

Das Konzept der Kommunikation zwischen Leuchten ist auch für andere der oben beschriebenen Leuchtentypen denkbar, wie es beispielsweise bei 62 schematisch zwischen den Leuchten 12A und 12C gezeigt ist. Ferner ist das Bediengerät 66 gegebenenfalls dazu ausgebildet, auch andere Leuchten zu schalten, beispielsweise die Leuchte 12B, wie es in Fig. 2 ebenfalls durch einen Pfeil 64 angedeutet ist.

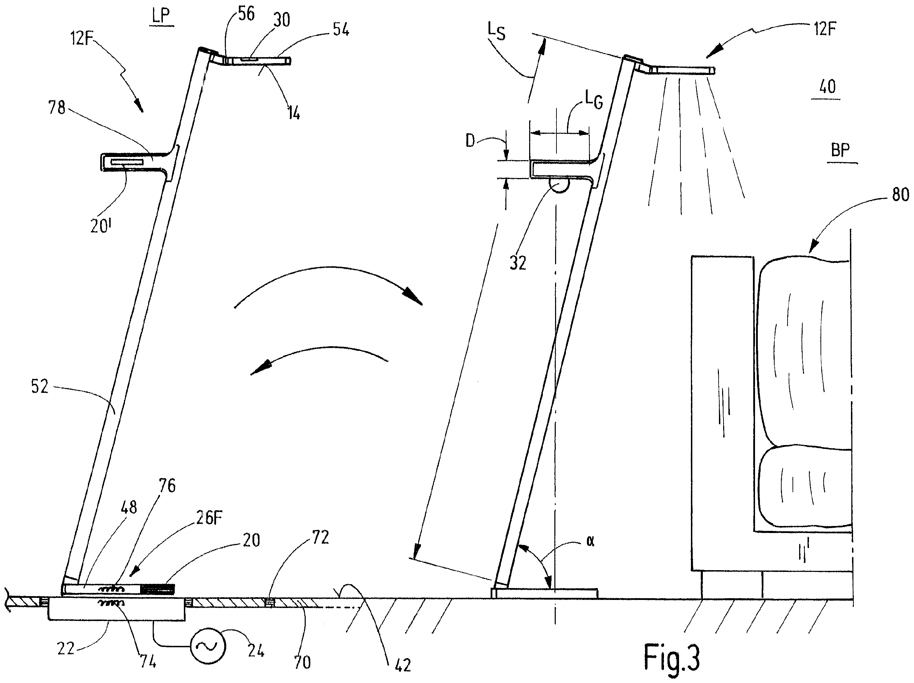

In Fig. 3 ist eine weitere Ausführungsform einer Leuchte 12F gezeigt, die hinsichtlich Aufbau und Funktionsweise der Leuchte 12C der Fig. 2 entspricht. Gleiche Elemente sind daher durch gleiche Bezugszeichen gekennzeichnet.

Die Leuchte 12F beinhaltet einen Korpus mit einem stützenartigen Grundkörper 52, an dessen Ende ein Kopf 54 über ein Gelenk 56 gelagert ist. Das Gelenk 56 kann ein um drei Achsen bewegliches Gelenk sein. An einer Oberseite des Kopfes 54 ist eine Schaltanordnung 30 vorgesehen, mittels der sich eine an der Unterseite des Kopfes 54 angeordnete Leuchtmittelanordnung 14 schalten lässt.

Der Fuß 48 ist so ausgebildet, dass er den Energiespeicher 20 aufnimmt. Ferner kann zwischen dem Fuß 48 und einer in den Boden 42 integrierten Ladeeinrichtung 22 ein induktiver Ladevorgang erfolgen. Zu diesem Zweck kann die Ladeeinrichtung 22 beispielsweise anstelle einer Fliese 70 eines fliesenbelegten Bodens in diesen integriert sein. Bei 72 sind schematisch Fugen derartigen Fliesen 70 dargestellt. Mit anderen Worten kann eine Oberseite der Ladeeinrichtung 22 bündig mit dem Boden 42 ausgerichtet sein, so dass die Leuchte 12F auf die Ladeeinrichtung 22 gestellt werden kann, um einen induktiven Ladevorgang durchzuführen. Zu diesem Zweck beinhaltet die Ladeeinrichtung 22 eine schematisch dargestellte Spule 74, und in den Fuß 48 ist eine weitere Spule 76 integriert. Die Spulen 74, 76 treten bei dem induktiven Ladevorgang magnetisch in Wechselwirkung, wie es an sich dem Grunde nach bekannt ist. Es versteht sich, dass in den Fuß 48 vorzugsweise noch ein weiterer Teil der Steueranordnung 18 integriert sein kann, um die über die Schnittstellenanordnung 26F aufgenommene Energie zu dem Energiespeicher 20 zu leiten und/oder zu der Leuchtmittelanordnung 14.

Wie es in Fig. 3 ferner auf der linken Seite dargestellt ist, weist die Leuchte 12F einen Griff 78 auf. Der Griff 78 erstreckt sich kragarmartig von dem stützenartigen Grundkörper 52. Der Grundkörper 52 ist starr an einem seitlichen Ende des Fußes 48 mit diesem verbunden und erstreckt sich unter einem Winkel α in Bezug auf die Horizontale, und zwar so, dass der Grundkörper 52 sich in vertikaler Projektion quer über den Fuß 48 erstreckt. Der Winkel α kann in einem Bereich von 45° bis 80° liegen, insbesondere in einem Bereich von 60° bis 80°. Der Griff 78 ist an dem Grundkörper 52 vorzugsweise auf einer dem Fuß 48 abgewandten Seite festgelegt. Der Griff 78 weist, wie es in Fig. 3 dargestellt ist, eine Länge L_{G} auf und einen Durchmesser D. Die Länge L_{G} kann beispielsweise im Bereich von 5 cm bis 20 cm liegen. Der Durchmesser D kann beispielsweise im Bereich von 1 cm bis 7 cm liegen.

Der Griff 78 kann auf einfache Weise von oben erfasst werden, um die Leuchte zu tragen. Der Griff 78 kann in einem Bereich einer oberen Hälfte des Grundkörpers 52 festgelegt sein und kann sich im Wesentlichen in horizontaler Richtung erstrecken.

Eine axiale Mitte des Griffes 78 ist vorzugsweise über einem Schwerpunkt der Leuchte 12F oder des Fußes 48 angeordnet, wie es durch eine senkrechte gestrichelte Linie in Fig. 3 dargestellt ist. Wenn folglich der Griff von unten mittels eines Bedienorgans wie eines Fingers 32 ergriffen wird, nimmt die Leuchte 12F eine Gleichgewichtsposition ein, die gegenüber der in Fig. 3 links gezeigten betrieblichen Normallage um nicht mehr als ± 30° abweicht, vorzugsweise um nicht mehr als ± 15°.

In Fig. 3 ist ferner gezeigt, dass die Leuchte mittels des Griffes 78 von dem Ort LP der Ladeeinrichtung 22 entfernt werden kann, und zwar hin zu einem zu beleuchtenden Ort BP, der in Fig. 3 schematisch durch ein Sofa 80 angedeutet ist, so dass die Leuchte 12F als Leseleuchte dienen kann. Eine axiale Länge L_{S} des Grundkörpers 52 kann beispielsweise im Bereich von 35 cm bis 150 cm liegen.

Obgleich in Fig. 3 eine induktive Ladeeinrichtung 22 gezeigt ist, versteht sich, dass die Leuchte 12F auch so ausgebildet sein kann, dass eine elektrische Schnittstelleneinrichtung an einer Seite des Fußes 48 ausgebildet ist, ähnlich wie es bei 26C in Fig. 2 dargestellt ist.

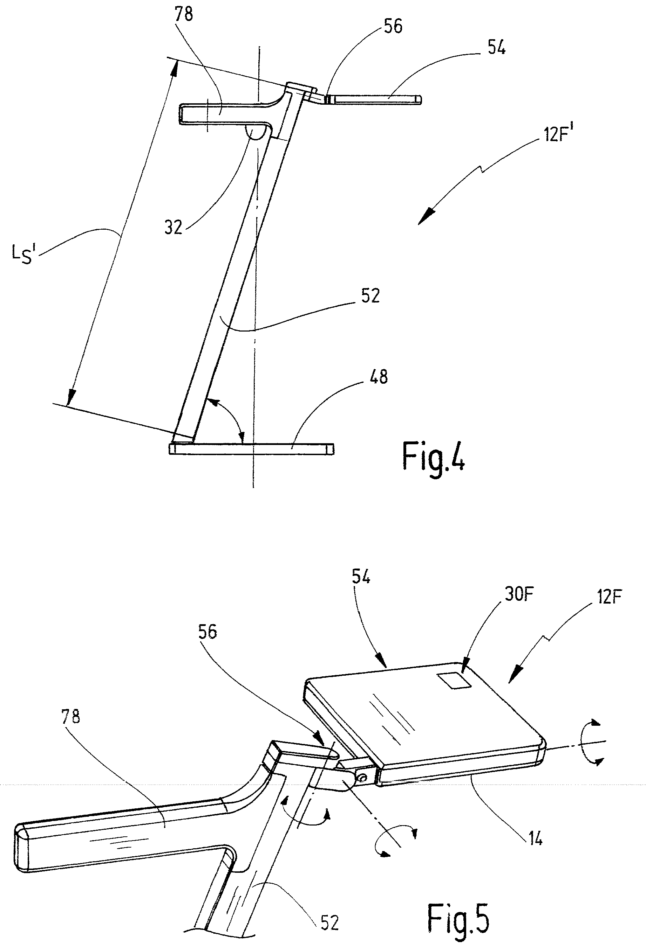

In Fig. 4 ist eine weitere Leuchte 12F' gezeigt, die eine Abwandlung der in Fig. 3 gezeigten Leuchte darstellt. Die Leuchte 12F' entspricht hinsichtlich Aufbau und Funktionsweise generell der Leuchte 12F der Fig. 3, so dass gleiche Elemente mit gleichen Bezugszeichen versehen sind.

Die Leuchte 12F' weist einen Grundkörper 52 mit einer kürzeren Länge L_{S'} auf als die Leuchte 12F. Die Länge LS' kann beispielsweise in einem Bereich von 15 cm bis 50 cm liegen. In diesem Fall kann der Griff 78 im Bereich des dem Fuß 48 abgewandten freien Endes des Grundkörpers 52 angeordnet sein. In diesem Fall kann eine über dem Schwerpunkt liegende Position des Griffes 78 beispielsweise näher an dem Grundkörper 52 liegen, wie es in Fig. 4 schematisch dargestellt ist.

Fig. 5 zeigt die in Fig. 3 gezeigte Leuchte 12F im Bereich ihres Kopfes 14. Es ist zu sehen, dass der Kopf 54 in der Draufsicht rechteckig ist und in beiden Seitenlängen eine größere Erstreckung aufweist als in der Höhe. An der Unterseite des Kopfes 54 ist die Leuchtmittelanordnung 14 vorgesehen. An der Oberseite des Kopfes 54 kann eine Schaltanordnung 30F ausgebildet sein, die beispielsweise berührungslos nach der Art einer Gestensteuerung arbeitet, wobei die Schaltanordnung 30F eine Reflex-Lichtschranke beinhalten kann.

In Fig. 5 ist ferner zu erkennen, dass das Gelenk 56 um drei voneinander unabhängige Achsen verdrehbar ist, so dass eine nahezu beliebige Einstellung des Kopfes 54 in Bezug auf den Grundkörper 52 möglich ist.

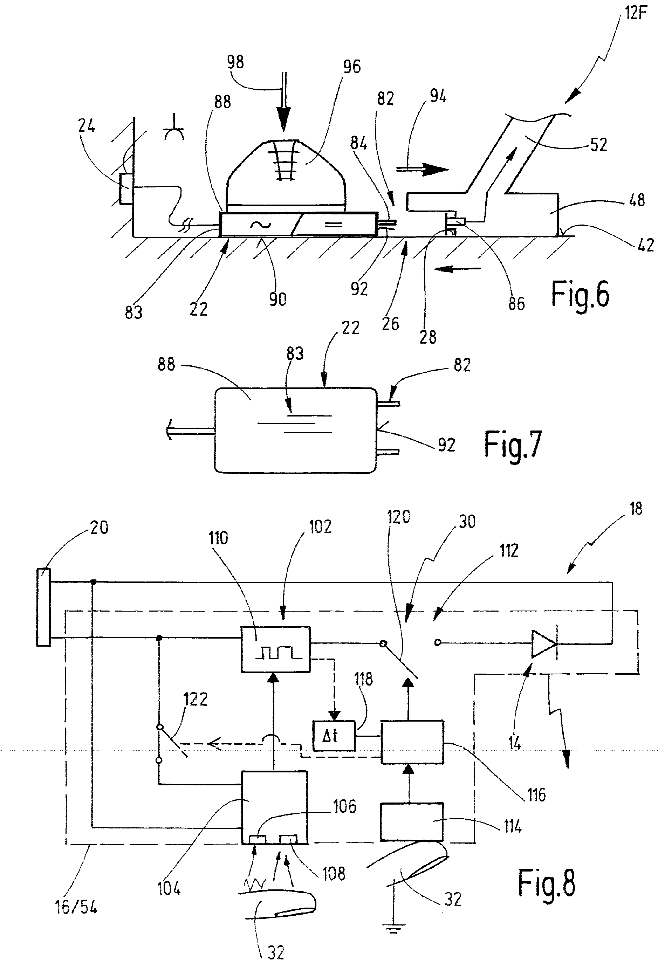

In Fig. 6 ist eine weitere Variante einer Leuchte 12F in Kombination mit einer Ladeeinrichtung 22 gezeigt. Die Ladeeinrichtung 22 und die Leuchte sind über eine elektrische Verbindungsanordnung 82 miteinander verbindbar. Die Ladeeinrichtung 22 weist ein Gehäuse 83 auf, das als flaches Gehäuse ausgebildet ist und an dem ein Stecker 84 mit Lade-Kontakten der elektrischen Verbindungsanordnung 82 vorgesehen ist. In entsprechender Weise ist an dem Fuß 48 der Leuchte 12F eine elektrische Buchse 86 mit Leuchten-Kontakten vorgesehen, in die der Stecker 84 gesteckt werden kann, um die Leuchte 12F mit der Ladeeinrichtung 22 zu koppeln.

Es ist zu erkennen, dass der Fuß 48 und/oder das Gehäuse 83 eine Magnetanordnung 28 aufweisen kann, um zu erreichen, dass die elektrische Verbindungsanordnung 82 im Wesentlichen aufgrund magnetischer Kräfte in elektrischem Kontakt gehalten wird. Auf diese Weise kann die elektrische Verbindungsanordnung 82 leicht gelöst werden, und zwar gegen die magnetische Anziehungskraft der Magnetanordnung 28.

Das Gehäuse 83 weist eine Oberseite 88 und eine Unterseite 90 auf. Die Unterseite 90 kann auf den Boden 42 aufgestellt werden. Der Stecker 84 ist im Bereich einer die Oberseite 88 und die Unterseite 90 verbindenden Seitenfläche 92 ausgebildet.

Wenn die Leuchte 12F an die Ladeeinrichtung 22 angenähert wird, führt eine magnetische Anziehungskraft 94 dazu, dass die elektrische Verbindungsanordnung 82 mit dem Stecker 84 und der Buchse 86 geschlossen wird. Der Stecker 84 und die Buchse 86 sind in Fig. 6 übertrieben dargestellt. Es kann sich auch in beiden Fällen um deutlich kürzere Elemente handeln, so dass auch ein schräges Trennen keine mechanischen Beschädigungen hervorrufen wird.

Die Oberseite 88 des Gehäuses 83 ist als Fußstellfläche ausgebildet. Folglich kann ein Fuß 96 darauf gestellt werden, um die Position der Ladeeinrichtung 22 mittels einer senkrechten Fixierkraft 98 zu fixieren. Hierdurch kann die Leuchte 12F auf einfache Weise gegen die Anziehungskraft 94 der Magnetanordnung 28 von der Ladeeinrichtung 22 gelöst und zu einem zu beleuchtenden Ort gebracht werden.

Fig. 7 zeigt die Ladeeinrichtung 22 von oben, mit der Oberseite 88 des Gehäuses 83 und einem oder mehreren Steckern 84 an einer Seitenfläche 92.

Fig. 8 zeigt in schematischer beispielhafter Form eine Steueranordnung 18 einer Leuchte 12. Die Steueranordnung 18 beinhaltet eine Schaltanordnung 30, die an einem Korpus 16 vorgesehen sein kann, beispielsweise im Bereich eines Kopfes 54.

Die Schaltanordnung 30 beinhaltet eine erste Schalteinrichtung 102. Die erste Schalteinrichtung 102 beinhaltet einen berührungslosen Sensor 104, der einen Sender 106 für Licht und einen Empfänger 108 aufweist, wobei der berührungslose Sensor 104 als Reflex-Lichtschranke ausgebildet sein kann. Der Sender 106 und der Empfänger 108 können in einem Wandbereich des Korpus 16 bzw. des Kopfes 54 ausgebildet sein, so dass durch Annäherung eines Bedienorgans wie eines Fingers 32 eine Betätigung der ersten Schalteinrichtung 102 möglich ist.

Die erste Schalteinrichtung 102 kann hierbei mit einer Dimmeinrichtung 110 verbunden sein, die den Energiespeicher 20 mit der Leuchtmittelanordnung 14 verbindet.

Die Schaltanordnung 30 beinhaltet ferner eine zweite Schalteinrichtung 112. Die zweite Schalteinrichtung 112 weist einen Kontaktsensor 114 auf, der beispielsweise als kapazitiver Sensor ausgebildet sein kann und durch Berührung mit einem Bedienorgan 32 wie einem Finger ausgelöst werden kann. Die zweite Schalteinrichtung 112 beinhaltet ferner eine Schlafsteuerung 116, die mit dem Kontaktsensor 114 verbunden ist. Die Schlafsteuerung 116 ist ferner mit einem Zeitverzögerungsglied 118 verbunden, das mit der ersten Schalteinrichtung 102 verbunden ist. Die Schlafsteuerung 116 dient dazu, einen Schalter 120 der zweiten Schalteinrichtung 112 zu betätigen, der seriell mit der ersten Schalteinrichtung 102 verbunden ist.

Da die erste Schalteinrichtung 102 aufgrund des Senders 106 im Betrieb Energie verbraucht, wird der Schalter 120 über das Zeitverzögerungsglied 118 eine Zeitspanne nach der letzten Erfassung eines Schaltvorganges geöffnet, um die Leuchte bzw. die Steueranordnung 18 in einen Schlafmodus zu versetzen. Bei Erfassung eines Kontaktes an dem Kontaktsensor 114 wird die Schlafsteuerung 116 dazu initiiert, den Schlafmodus aufzuheben, indem der Schalter 120 geschlossen wird. Nun leuchtet die Leuchtmittelanordnung wieder, und der berührungslose Sensor 104 wird wieder mit Energie versorgt, so dass die Leuchte erneut gedimmt werden kann.

Das Zeitverzögerungsglied 118 kann dazu eingestellt sein, um die Leuchte automatisiert nach einer bestimmten Zeit abzuschalten.

In einer in Fig. 8 gestrichelt dargestellten Ausgestaltung kann die Schlafsteuerung 116 auch dazu ausgebildet sein, einen Schalter 122 zu öffnen bzw. zu schließen, der den berührungslosen Sensor 104 mit Energie versorgt. Beispielsweise kann nach der letzten Betätigung des berührungslosen Sensors 104 nach einer vorbestimmten Zeitspanne von beispielsweise einer Minute (bevorzugter Bereich 30 Sekunden bis 5 Minuten) der Schalter 112 geöffnet werden, so dass der berührungslose Sensor 104 nicht mehr mit Energie versorgt wird. Der Schalter 120 kann bei dieser Variante geschlossen bleiben, so dass die Leuchtmittelanordnung 14 weiter mit Energie versorgt wird, und zwar mit der durch die Dimmeinrichtung 110 eingestellten Leistung.

Wenn eine Bedienperson dann die Lampe ausschalten möchte oder aber die Leistung ändern möchte, so hat er zunächst über den Kontaktsensor 114 den Schlafmodus aufzuheben, wodurch der Schalter 122 geschlossen wird, so dass erneut ein berührungsloses Dimmen der Leuchtmittelanordnung möglich ist, und/oder ein Ausschalten derselben.

Die beiden Varianten können auch miteinander kombiniert werden, so dass die Schlafsteuerung 116 sowohl zum Langzeit-Ausschalten der Leuchtmittelanordnung 14 als auch zum Kurzzeit-Deaktivieren des berührungslosen Sensors 104 verwendbar ist.

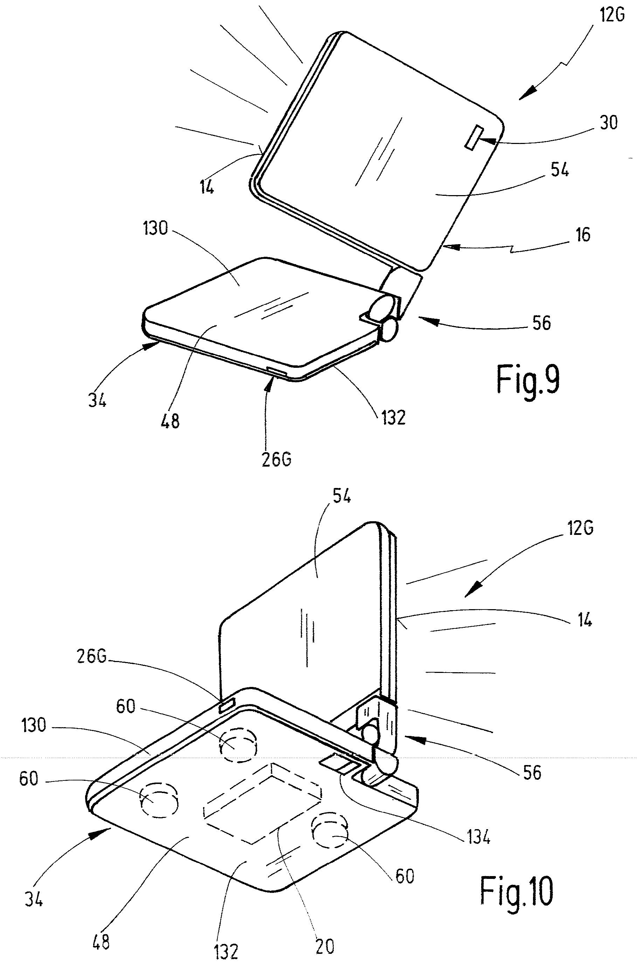

In den Fig. 9 und 10 ist eine weitere Ausführungsform einer Leuchte 12G gezeigt. Die Leuchte 12G weist einen Korpus 16 mit einem Fuß 48 und einem Kopf 54 auf, wobei der Kopf 54 über ein Gelenk 56 mit dem Fuß 48 verbunden ist. Der Kopf 54 kann identisch aufgebaut sein wie bei der Leuchte 12F der Fig. 3 bis 5. Das Drehgelenk 56 kann ebenfalls in identischer Weise ausgebildet sein. Der Fuß 48 weist vorzugsweise ähnliche Abmessungen auf wie der Kopf. Der Fuß 48 und der Kopf 54 können über das Drehgelenk 56 in einer Ebene ausgerichtet werden, so dass die Leuchte 12G flach in eine Tasche gesteckt werden kann.

Der Fuß 48 stellt einen Lager-/Halteabschnitt 34 dar, da die Leuchte 12G mit dem Fuß 48 auf eine beliebige Oberfläche gestellt werden kann. An dem Fuß 48 kann ferner eine Schnittstellenanordnung 26G ausgebildet sein, um einen in dem Fuß 48 aufgenommenen Energiespeicher 20 zu laden. Die Schnittstellenanordnung 26G kann beispielsweise eine Mikro-USB-Schnittstelle sein.

Der Kopf 54 weist eine Oberseite auf, an der die Schaltanordnung 30 ausgebildet ist. Die Oberseite ist vorzugsweise aus Metall ausgebildet, insbesondere aus einer Aluminiumlegierung. Die Leuchtmittelanordnung 40 kann eine OPAK-Platte beinhalten, die mit Löchern ausgebildet ist, durch die hindurch ein Array von LEDs leuchtet.

Der Fuß 48 weist eine Oberschale 130 auf, die ebenfalls vorzugsweise aus einem Metall hergestellt ist, insbesondere aus der gleichen Art von Metall wie das Oberteil des Kopfes 54. Ferner weist der Fuß 48 eine Unterschale 132 auf, die vorzugsweise aus Kunststoff hergestellt ist. Die Oberschale 130 und die Unterschale 132 weisen vorzugsweise eine identische Grundform auf und umschließen ein Volumen, innerhalb dessen der Energiespeicher aufgenommen ist. Innerhalb dieses Volumens können ferner ein oder mehrere Magnete aufgenommen sein, um den Fuß nicht nur auf einer waagerechten Oberfläche abstellen zu können, sondern auch an einem magnetisierbaren oder magnetischen Gegenmittel befestigen zu können.

Ferner kann an der Unterschale 132 ein Ein-/Ausschalter 134 ausgebildet sein, der die Energieversorgung zwischen der Leuchtmittelanordnung 14 und dem Energiespeicher 20 unterbricht. Der Ein-/Ausschalter 134 ist vorliegend als mechanischer Schalter ausgebildet, könnte jedoch auch als Kontaktsensor 114 ausgebildet sein, ähnlich, wie es in Fig. 8 dargestellt ist.

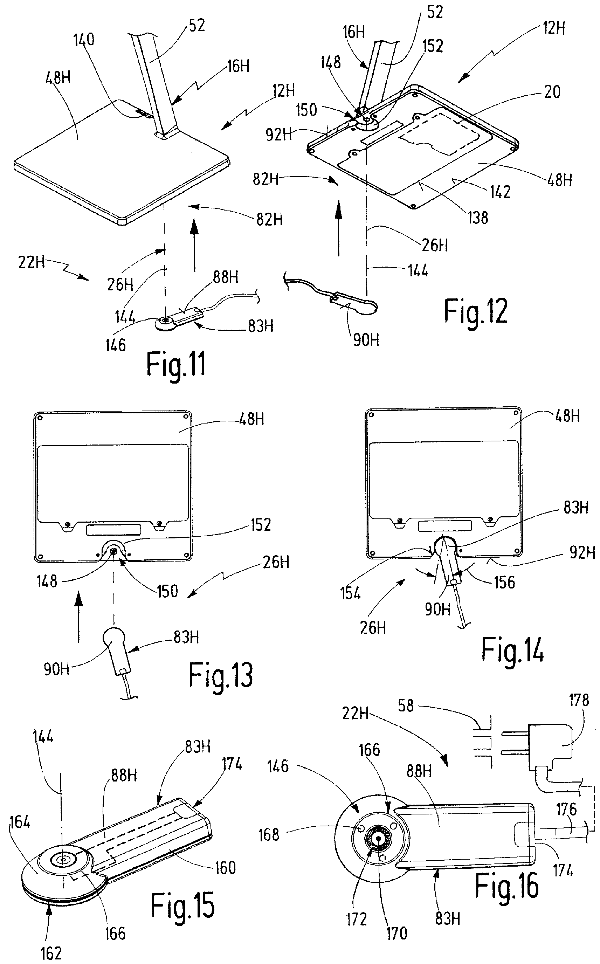

In den Fig. 11 bis 14 ist eine weitere Ausführungsform einer Leuchte 12H gezeigt, die hinsichtlich Aufbau und Funktionsweise generell den Leuchten 12d der Fig. 12, 12F der Fig. 2 bis 5 entsprechen kann, wobei ein Korpus 16H der Leuchte einen stützenartigen Grundkörper 52 aufweist, an dem, wie beispielsweise in Fig. 4 gezeigt, ein Griff 78 ausgebildet sein kann und an dessen oberem Ende ein Leuchtenkopf 54 festgelegt sein kann, insbesondere über eine gelenkige Verbindung 56.

Gleiche Elemente gegenüber den oben beschriebenen Ausführungsformen sind daher durch gleiche Bezugszeichen gekennzeichnet. Im Folgenden werden im Wesentlichen die Unterschiede erläutert.

Zum einen ist in Fig. 11 zu erkennen, dass an der Oberseite des Fußes 48H eine Ladeanzeige bzw. Ladestandanzeige ausgebildet ist. Die Ladestandanzeige 140 kann einen Ladezustand eines elektrischen Energiespeichers 20 anzeigen, der in dem Fuß 48H aufgenommen ist, wie es in Fig. 12 schematisch angedeutet ist. Dort ist auch zu erkennen, dass an der Unterseite des Fußes 48H ein Energiespeicherdeckel 138 ausgebildet sein kann, über den der Energiespeicher 20, der nach der Art eines Mobiltelefon-Akkumulators ausgebildet sein kann, austauschbar ist.

Die Ladeanzeige 140 kann ferner weitere Merkmale aufweisen, wie sie eingangs beschrieben worden sind.

Der Fuß 48H weist eine Unterseite 142 auf, die eine Lagerebene definiert, also eine Ebene, über die die Leuchte 12H gelagert ist. Da es sich bei der Leuchte 12H um eine Stehleuchte handelt, ist die Lagerebene parallel zu einer Horizontalen ausgerichtet.

Ferner ist in den Fig. 11 bis 14 eine elektrische Verbindungsanordnung 82H einer Schnittstellenanordnung 26H einer Ladeeinrichtung 22H dargestellt. Die Verbindungsanordnung 82H dient in diesem Fall zum Verbinden von Lade-Kontakten 146 an einem Ladeeinrichtungsgehäuse 83H mit Leuchten-Kontakten 148, die an dem Fuß 48H der Leuchte 12H ausgebildet sind. Die Verbindungsanordnung 82 kann ferner einen oder mehrere Magnete beinhalten, um die Verbindungsanordnung 82H in der gekoppelten Position magnetisch zu halten, so dass zum einen Trennen der Verbindungsanordnung 82H erleichtert wird, aber auch ein Koppeln erleichtert werden kann.

Die Verbindungsanordnung 82H definiert eine Verbindungsachse 144, die vorliegende quer, insbesondere senkrecht zu der Lagerebene 142 ausgerichtet ist.

Die Verbindungsachse 144 ist durch die Richtung definiert, mit der die Lade-Kontakte 146 und die Leuchten-Kontakte 148 miteinander in Verbindung gelangen oder auszurichten sind.

Vorliegend ist an dem Fuß 48H der Leuchte 12H eine Ausnehmung 150 vorgesehen, die vorzugsweise unterhalb jenes Bereiches des Fußes 48H ausgebildet ist, von dem aus sich der stützenartige Grundkörper 52 nach oben erstreckt. Die Ausnehmung 150 ist zum einen zu einer Seitenfläche 92H des Fußes 48H offen und ist ferner zu der Unterseite 142 des Fußes 48H hin offen.

Die Ausnehmung 150 weist einen Ausnehmungskonus 152 auf, der konzentrisch zu der Verbindungsachse 144 angeordnet ist. Der Ausnehmungskonus 152 weist im Bereich der Unterseite 142 einen großen Durchmesser auf, und verjüngt sich zur Oberseite des Fußes 48H hin. Der Ausnehmungskonus 152 erstreckt sich in Umfangsrichtung um die Verbindungsachse 144 herum um einen Winkel von etwa 180°, und zwar auf jener Seite der Ausnehmung 150, die der Seitenfläche 92H gegenüberliegt. Die Leuchten-Kontakte 148 liegen innerhalb des Ausnehmungskonus 152.

Die Ausnehmung 150 weist ferner eine insbesondere in Fig. 14 erkennbare Einführungsschräge 154 auf, die von der Seitenfläche 92H ausgeht und sich hin zu dem Ausnehmungskonus 152 verjüngt.

Die Einführungsschräge 154 ermöglicht es in Verbindung mit dem Ausnehmungskonus 152 und der Tatsache, dass die Ladekontakte 146 und die Leuchten-Kontakte 148 konzentrisch zu der Verbindungsachse 144 ausgerichtet sind, dass sich ein abschnittsweise in die Ausnehmung 150 hinein erstreckendes Ladeeinrichtungsgehäuse 83H parallel zu der Unterseite 142 (Lagerebene) um einen Winkel 156 verschwenken lässt, der in einem Bereich von 10° bis 90° liegt, insbesondere in einem Bereich von 15° bis 45°. Dies ermöglicht es, dass die Herstellung der Verbindungsanordnung bzw. die Kopplung der Kontakte 146, 148 in einer Vielzahl unterschiedlicher Relativpositionen zwischen Fuß 48H und Ladeeinrichtungsgehäuse 83H erfolgen kann.

Wie es in den Fig. 15 und 16 gezeigt ist, weist das Ladeeinrichtungsgehäuse 83H eine im Wesentlichen quaderförmige Basis 160 auf, die an ihrem einen Längsende einen Konusansatz 162 aufweist, der einen Gehäusekonus 164 definiert, der von einer Unterseite des Ladeeinrichtungsgehäuses 83H konisch zusammenläuft und sich über einen Winkel von größer als 180° und kleiner als 270° erstreckt. Der Gehäusekonus 164 ist hinsichtlich Abmessungen und Konussteigung an den Ausnehmungskonus 152 der Ausnehmung 150 angepasst.

Der Konusansatz 162 weist auf seiner Oberseite eine ebene Kreisfläche 166 auf, die vorzugsweise gegenüber einer Oberseite der Basis 160 vorsteht. An der Kreisfläche 166 kann, wie es in Fig. 16 gezeigt ist, ein Gehäusemagnetteil 168 vorgesehen sein, der mit einem weichmagnetischen Abschnitt der Ausnehmung 150 zusammenwirken kann, um ein magnetisches Halten der Verbindungsanordnung nach der Art eines magnetischen Docks zu realisieren.

Ferner sind an der Kreisfläche 166 ein erster Lade-Kontakt 170 der Lade-Kontakte 146 vorgesehen. Der erste Lade-Kontakt 170 ist als kreisförmiger zentraler Kontakt ausgebildet. Ferner ist an der Kreisfläche 166 ein zweiter Lade-Kontakt 172 ausgebildet, der als Ringkontakt ausgeformt ist, und zwar konzentrisch zu dem ersten Lade-Kontakt 170 und radial beabstandet hiervon.

Die Lade-Kontakte 170, 172 bilden die oben beschriebenen Lade-Kontakte 146 und entsprechen in Form und Anordnung den Leuchten-Kontakten 148. Einer der Lade-Kontakte 170, 172 kann ein Plus-Pol sein. Der andere Lade-Kontakt kann ein Minus-Pol sein. Über die Ladekontakte 170, 172 kann eine Gleichspannung bereitgestellt werden, die zum Aufladen des Energiespeichers 20 angepasst ist, beispielsweise eine Spannung in einem Bereich von 4 bis 24 Volt.

An dem dem Konusansatz 162 gegenüberliegenden Längsende der Basis 160 ist eine elektrische Standard-Schnittstelle 174 ausgebildet, die als ComputerSchnittstelle, insbesondere als USB-Schnittstelle ausgebildet sein kann. In die Schnittstelle 174, die insbesondere als Buchse ausgebildet sein kann, kann ein Stecker eines Standard-Ladekabels 176 eingeführt werden. Das andere Ende des Standard-Ladekabels 176 kann mit einem Standard-Ladekonverter 178 verbunden sein, der beispielsweise in eine Steckdose 58 einsteckbar ist. Der Standard-Ladekonverter 178 setzt die an der Steckdose 58 bereitgestellte Wechselspannung in eine Gleichspannung um, die über das Standard-Ladekabel 176 hin zu der elektrischen Standard-Schnittstelle 174 geführt werden kann. Innerhalb des Ladeeinrichtungsgehäuses 83H wird diese Ladespannung von Kontakten der elektrischen Standard-Schnittstelle 174 abgegriffen und dann mit den Lade-Kontakten 170, 172 elektrisch verbunden.

Das Ladeeinrichtungsgehäuse 83H weist bei dieser Ausführungsform vorzugsweise keine eigene Ladeelektronik auf. Vielmehr kann zum Laden des Energiespeichers 20 ein Standard-Ladekonverter 178 verwendet werden.

Das Ladeeinrichtungsgehäuse 83H ist insbesondere dazu ausgebildet, auf einem Boden bzw. Fußboden angeordnet zu werden. Eine Oberseite der Basis 160, die in Fig. 15 und 16 mit 88H gekennzeichnet ist, kann als eine Fußstellfläche dienen, ähnlich wie es in Fig. 6 dargestellt ist.

Zum Andocken der Leuchte 12H an das auf dem Boden liegende Ladeeinrichtungsgehäuse 83H wird die Leuchte so bewegt, dass die Ausnehmung 150 etwa mit dem Konusansatz 162 ausgerichtet wird. Aufgrund der Tatsache, dass die Einführschräge 154 vorgesehen ist, und aufgrund der Tatsache, dass der Gehäusekonus 164 mit dem Ausnehmungskonus 152 zusammenwirken kann, erfolgt eine Zentrierung in Bezug auf die Verbindungsachse 144 auch dann, wenn anfangs eine gewisse Fehlausrichtung vorlag. Ferner wird der Konusansatz 162 aufgrund des Gehäusemagnetteils 168 magnetisch entlang der Verbindungsachse 144 gegen die "Decke" der Ausnehmung 150 gezogen, um auf diese Weise die Lade-Kontakte 146 mit den Leuchten-Kontakten 148 elektrisch zu verbinden.

Die Abmessungen von der Ausnehmung 150 und von dem Konusansatz 162 können so sein, dass das Ladeeinrichtungsgehäuse 83H bei gekoppelten Kontakten 146, 148 nach wie vor auf einem Boden aufliegt. Das Ladeeinrichtungsgehäuse 83H kann jedoch auch etwas gegenüber dem Boden abgehoben sein, und zwar aufgrund der magnetischen Haltekräfte des Gehäusemagnetteils 168.

Zum Trennen der Verbindungsanordnung 82H kann die Leuchte hochgehoben werden, wobei vorzugsweise ein Fuß auf die Basis 160 gestellt wird, um bei diesem Vorgang die Magnetkräfte des Gehäusemagnetteils 168 zu überwinden. Sofern die Leuchte unbeabsichtigt über die Länge des Standard-Ladekabels 176 hinaus von der Steckdose 58 entfernt wird, können die hierbei auftretenden unbeabsichtigten Kräfte die magnetischen Haltekräfte ebenfalls lösen, wobei auf diese Weise ein Trennen der Verbindungsanordnung erfolgen kann, ohne eine Zerstörung hervorzurufen. Somit kann ein Trennen der Verbindungsanordnung 82H ebenfalls erleichtert werden.

Das Koppeln von Ladeeinrichtungsgehäuse 83H und Fuß 48H bzw. dessen Ausnehmung 150 kann entweder erfolgen, indem der Fuß parallel zu der Unterseite 142 in Richtung auf den Gehäusekonus 164 zu geschoben wird oder umgekehrt. Hierbei erfolgt eine Ausrichtung der Kontakte 146, 148 zunächst in Richtung parallel zu der Unterseite 142 bzw. der Lagerebene. Die Kontaktierung erfolgt jedoch wiederum parallel zu der Verbindungsache 144, indem der Gehäusekonus 164 aufgrund der Magnetkräfte in den Ausnehmungskonus 152 hineingezogen wird, und zwar parallel zu der Verbindungsachse 144. Die seitliche Annäherung, die erst am Ende zu der Bewegung von Ladeeinrichtungsgehäuse 83H und Fuß 48H entlang der Verbindungsachse 144 führt, ist in Fig. 13 schematisch durch einen Pfeil angedeutet.

Eine Kopplung und Entkopplung von Fuß 48H und Ladeeinrichtungsgehäuse 83H ist natürlich auch rein senkrecht möglich, wie es in Fig. 11 und 12 schematisch angedeutet ist.

Die in den Fig. 11 bis 16 gezeigte Leuchtenanordnung mit der Leuchte 12H und dem Ladeeinrichtungsgehäuse 83H, das nach der Art eines Magnetdocks ausgebildet ist, ist mit den oben beschriebenen Ausführungsformen jeweils kombinierbar. Insbesondere kann zusätzlich zu der elektrischen Verbindungsanordnung eine induktive Schnittstellenanordnung vorgesehen sein. Ferner kann eine drahtlose Kommunikationseinrichtung integriert sein, über die die tragbare Leuchte mit anderen Leuchten gemeinsam geschaltet bzw. gedimmt werden kann. Schließlich kann eine Schaltanordnung zum Betätigen der Leuchte ähnlich aufgebaut sein, wie es unter Bezugnahme auf Fig. 8 beschrieben worden ist.

Der stützenartige Grundkörper 52 kann mit einem Leuchtenkopf 54 gekoppelt sein, wie er in Fig. 5 dargestellt ist.

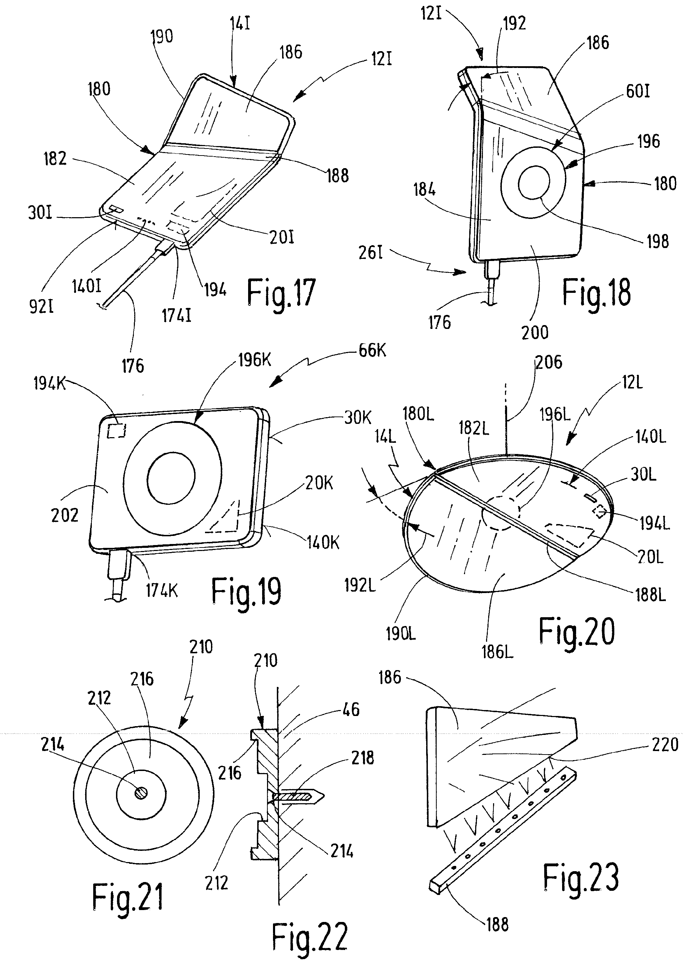

In den Fig. 17 bis 24 ist eine Leuchtenfamilie für eine weitere Ausführungsform einer erfindungsgemäßen Leuchtenanordnung gezeigt. Die Leuchten der Fig. 17 bis 24 entsprechen hinsichtlich Aufbau und Funktionsweise generell den oben beschriebenen Leuchten, und zwar insbesondere den Leuchten 12B, 12D, 12E der Fig. 2. Bei den Leuchten der Leuchtenfamilie der Fig. 17 bis 24 handelt es sich vorzugsweise um Wandleuchten, Deckenleuchten oder Pendelleuchten. Vorzugsweise teilen sich die Leuchten der Fig. 17 bis 24 eine Magnethaltetechnologie zum Befestigen der Leuchten an der Wand, an der Decke oder an einem Pendel.

In den Fig. 17 und 18 ist eine erste Leuchte dieser Leuchtenfamilie schematisch dargestellt und generell mit 12I bezeichnet.

Die Leuchte 12I weist einen flachen quaderförmigen Körper 180 auf, der eine Korpusvorderseite 182 (Fig. 17) und eine Korpusrückseite 184 (Fig. 18) aufweist. Die Korpusrückseite 184 bildet eine Lagerebene, die parallel zu einer Befestigungsebene (Wand oder Decke oder dergleichen) liegt.

An der Korpusvorderseite 182 kann eine Schaltanordnung 30I vorgesehen sein, die hinsichtlich Aufbau und Funktionsweise der Schaltanordnung 30 entsprechen kann, wie sie in Bezug auf die Leuchte der Fig. 5 und die Leuchte der Fig. 9 und 10 beschrieben worden ist. Ferner ist an der Korpusvorderseite 182 eine Ladeanzeige 140I angeordnet, über die ein Ladezustand eines in den Korpus 180 integrierten Energiespeichers 120I abfragbar bzw. anzeigbbar ist.

An einer Seitenfläche 92I ist eine elektrische Standard-Schnittstelle 174I ausgebildet, die identisch sein kann mit der Standard-Schnittstelle 174 des Ladeeinrichtungsgehäuses 83H der Fig. 15 und 16 oder mit der in Fig. 9 und 10 schematisch angedeuteten Schnittstelle 26G. Die Standard-Schnittstelle 174 bildet vorliegend einen Teil einer solchen elektrischen Schnittstelle 26I.

Der Korpus 180 ist auf einem der Seitenfläche 92I gegenüberliegenden Längsende mit einem plattenförmigen Leuchtmittel bzw. einer Leuchtplatte 186 verbunden. Die Leuchtplatte 186 kann beispielsweise eine opake Plexiglasscheibe sein, kann jedoch auch eine Glasscheibe mit eingestreuten Partikeln sein.

Die Leuchtplatte 186 wird über einen Einspeiseabschnitt 182 gespeist. Insbesondere wird in eine Seitenkante (nicht gezeigt) der Leuchtplatte 186 Licht eingekoppelt. Der Einspeiseabschnitt 188 ist nach der Art einer Leiste in dem Bereich zwischen dem Korpus 180 und der Leuchtplatte 186 angeordnet. Der Einspeiseabschnitt 188 weist vorzugsweise eine Mehrzahl von entlang einer Leistenform angeordneter LEDs auf, die aus dem Energiespeicher 20I gespeist werden.

Der Korpus180 weist einen Rahmen 190 auf, der die Leuchtplatte 186 umgibt. In manchen Fällen kann auf den Rahmen 190 jedoch auch verzichtet werden.

Die Leuchtplatte 186 mit dem Rahmen 190 ist gegenüber der Korpusvorderseite 182 und/oder der Korpusrückseite 184 um einen Winkel 192 abgewinkelt. Der Winkel 192 kann in einem Bereich von 3° bis 90°, jeweils einschließlich, liegen und liegt vorzugsweise in einem Bereich von 15° bis 45°, jeweils einschließlich.

Ferner kann der Einspeiseabschnitt 188 unter einem nicht näher bezeichneten Winkel in einem Bereich von 5° bis 60° in Bezug auf die Seitenfläche 92I geneigt ausgerichtet sein. Der Einspeiseabschnitt 188 kann jedoch auch parallel zu der Seitenfläche 92I und/oder senkrecht zu dazwischen liegenden nicht näher bezeichneten Seitenflächen ausgerichtet sein.

Durch die Abwinklung der Leuchtplatte 186 gegenüber dem Korpus 180 ist es bei einer Anbringung der Leuchte 12I an einer Wand oder Decke möglich, dass Licht sowohl aus der der Korpusvorderseite 182 zugewandten Oberfläche der Leuchtplatte 186 abstrahlt, als auch Licht von der gegenüberliegenden Oberfläche der Leuchtplatte, die der Korpusrückseite 184 zugewandt ist. Folglich kann eine Lichtwirkung nach der Art eines direkten und eines indirekten Lichtes erzielt werden, um eine beispielhafte Anwendung hierfür zu nennen.

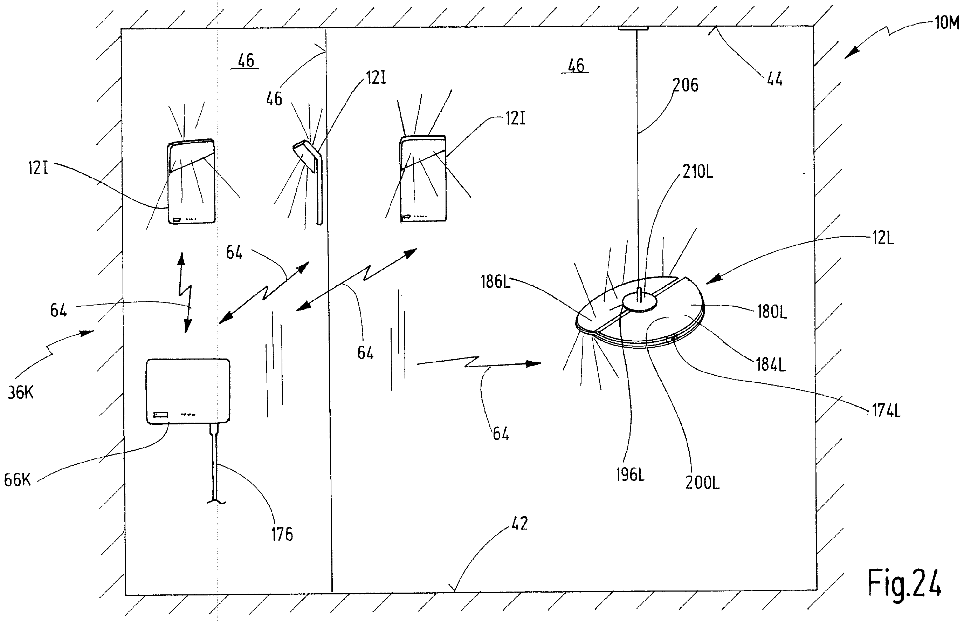

In den Korpus 180 ist ferner ein Kommunikationsmodul 194 integriert. Das Kommunikationsmodul kann insbesondere Teil einer drahtlosen Kommunikationseinrichtung 36K sein, wie sie in Fig. 24 gezeigt ist. Das Kommunikationsmodul 194 kann in Kommunikationsverbindung mit anderen Leuchten und/oder mit einem Bediengerät 66 treten. Vorzugsweise ist es über die Kommunikationseinrichtung 36K möglich, eine Mehrzahl von Leuchten synchron zu schalten und/oder zu dimmen.

Wie es in Fig. 18 zu sehen ist, weist die Leuchte 12I im Bereich der Korpusrückseite 184 ferner einen Ein-/Aus-Schalter auf, sowie eine Haltemagnetanordnung 196.

Die Haltemagnetanordnung 196 bildet vorliegend einen Magneten 60I zur Anbringung der Leuchte 12I an einer Wand oder einer Decke. Die Haltemagnetanordnung 196 weist dabei ein Zentriermerkmal 198 auf, mittels dessen die Haltemagnetanordnung 196 in Bezug auf ein nachstehend beschriebenes Magnetbefestigungsteil zentrierbar ist. Das Zentriermerkmal 198 kann beispielsweise ein kreisförmiger Vorsprung sein, der gegenüber der Haltemagnetanordnung 196 vorsteht.

Die Leuchte 12I kann in einer Ausführungsform über die Schaltanordnung 30I in einen Mastermode versetzt werden, bei dem das Kommunikationsmodul 194 sämtliche Änderungen des Zustandes der Leuchte 12I mit einer Mehrzahl von "Slave"-Leuchten synchronisiert. Im Regelfall ist das Kommunikationsmodul 194 der Leuchte 12I jedoch immer ein "Slave"-Modul, das mittels eines Masters in Form eines Bediengerätes 66K ansteuerbar ist, wie es in Fig. 19 gezeigt ist.

Das Bediengerät 66K weist einen Bediengerätkorpus 202 auf, der ebenfalls als flacher plattenförmiger Korpus ausgebildet sein kann, mit einer in Fig. 19 dargestellten Korpusrückseite, an der eine Haltemagnetanordnung 196K ausgebildet sein kann, die identisch ist zu der Haltemagnetanordnung 196 der Fig. 18.

In dem Bediengerätkorpus 202 kann ferner ein elektrischer Energiespeicher 20K angeordnet sein. An dem Bediengerätkorpus 202 kann ferner eine Standard-Schnittstelle 174K vorgesehen sein, um auf diese Weise den Energiespeicher 20K laden zu können.

In dem Bediengerätkorpus 202 ist ferner ein Kommunikationsmodul 194K ausgebildet, das vorzugsweise als "Master"-Modul ausgebildet ist und mit einer Mehrzahl von Leuchten (wie beispielsweise einer Mehrzahl der Leuchten 12I oder auch beliebigen anderen der oben beschriebenen Leuchten) in Kommunikationsverbindung treten kann, um diese synchron zu steuern.

An der nicht näher gezeigten Vorderseite des Bediengerätkorpus 202 kann eine Ladeanzeige 140K angeordnet sein, wie auch eine Schaltanordnung 30K. Die Schaltanordnung 30K und die Ladeanzeige 140K können identisch ausgebildet sein, wie die entsprechenden Elemente 30I, 140I der Fig. 17.

In Fig. 20 ist eine weitere Ausführungsform einer Leuchte 12L gezeigt, die hinsichtlich Aufbau und Funktionsweise generell der Leuchte 12I entspricht. Gleiche Elemente sind daher durch gleiche Bezugszeichen gekennzeichnet. Im Folgenden werden im Wesentlichen die Unterschiede erläutert.

Die Leuchte 12L kann vorzugsweise an einem Pendel 206 temporär befestigt werden, und zwar vorzugsweise mittels einer Haltemagnetanordnung 196L, die auf einer Rückseite bzw. Oberseite der Leuchte 12L ausgebildet ist, die in Fig. 20 nicht zu sehen ist.

Die Leuchte 12L weist einen Korpus 180 L auf, der vorzugsweise als halbkreisförmige Platte ausgebildet ist. An einer Unterseite 182L des Korpus 180L können eine Schaltanordnung 30L sowie eine Ladeanzeige 140L ausgebildet sein, die den Elementen 30I, 140I der Fig. 17 entsprechen können.

In den Korpus 180L ist ferner ein elektrischer Energiespeicher 20L integriert, wie auch ein Kommunikationsmodul 194L, die hinsichtlich Aufbau und Funktionsweise generell vergleichbar sein können zu den entsprechenden Elementen 20I, 194I der Leuchte der Fig. 17.

Die Leuchte 12L weist ferner vorzugsweise eine halbkreisförmige Leuchtplatte 186L auf, die so geformt ist, dass der Korpus 180L und die Leuchtplatte 186L gemeinsam beispielsweise eine Kreisform definieren. Wie bei der Ausführungsform der Fig. 17 und 18 ist jedoch die Leuchtplatte 186L gegenüber dem Korpus 180L um einen Winkel 192L abgewinkelt, der in einem ähnlichen Winkelbereich liegen kann, wie der oben beschriebene Winkel 192.

Ferner kann um die Leuchtplatte 186L herum ein halbkreisförmiger Rahmen 190L vorgesehen sein.

Zwischen dem Korpus 180L und der Leuchtplatte 186L ist ein Einspeiseabschnitt 188L vorgesehen, mittels dessen Licht in eine Seitenkante der Leuchtplatte 186L eingekoppelt werden kann. Licht wird vorzugsweise wiederum von einer der Unterseite 182L zugewandten Oberfläche der Leuchtplatte 186L abgestrahlt, und vorzugsweise auch von einer der nicht dargestellten Oberseite zugewandten Oberfläche der Leuchtplatte 186L.

Das Pendel 206 kann beispielsweise durch ein einfaches Seil gebildet sein, das an seinem oberen Ende beispielsweise an einer Decke rein mechanisch befestigt wird. An der Unterseite bzw. dem freien Ende des Pendels kann ein Magnetbefestigungsteil befestigt sein, das mit der in Fig. 20 nicht näher gezeigten Haltemagnetanordnung 196L zusammenwirken kann. Die Haltemagnetanordnung 196L ist vorzugsweise konzentrisch zu einer Kreisform an der Oberseite des Korpus 180L befestigt, welche Kreisform durch den Korpus 180L und die Leuchtplatte 186L definiert wird. Folglich kann die Leuchte 12L so an dem Pendel 206 befestigt werden, dass der Korpus 182L vorzugsweise waagerecht ausgerichtet ist.

In den Fig. 21 und 22 ist ein Magnetbefestigungsteil 210 gezeigt, wie es beispielsweise an einer Wand befestigbar ist oder an einem Ende eines Pendels 206. Das Magnetbefestigungsteil 210 weist einen Grundkörper aus einem weichmagnetischen Material auf, der etwa kreisförmig ausgebildet ist und ein Zentriermittel 212 in Form einer kreisförmigen axialen Vertiefung aufweist. In diese Vertiefung bzw. in das Zentriermittel 212 kann beispielsweise das Zentriermerkmal 198 der Haltemagnetanordnung 196 eingreifen.

Zentral weist das Magnetbefestigungsteil 210 vorzugsweise einen Befestigungsabschnitt auf, der beispielsweise durch eine Bohrung gebildet sein kann, über die eine Schraube 218 hindurchgeführt werden kann. In Fig. 22 ist gezeigt, dass eine solche Schraube durch den Befestigungsabschnitt 214 hindurchgeht und an einem nicht näher bezeichneten Dübel in einer Wand 46 festgelegt ist.

Das Magnetbefestigungsteil 210 kann ferner vorzugsweise eine Haltemagnetaufnahme 216 aufweisen, in die die Haltemagnetanordnung 196 vollständig aufgenommen werden kann. Auf diese Weise kann eine ästhetisch ansprechende Magnetverbindung eingerichtet werden.

Fig. 23 zeigt in schematischer Form einen Einspeiseabschnitt 188, der leistenförmig mit einer Mehrzahl von nicht näher bezeichneten LEDs ausgebildet ist, die ihr Licht in eine Seitenfläche 220 einer Leuchtplatte 186 einkoppeln. Die Leuchtplatte 186 kann beispielsweise als opake Platte ausgebildet sein, so dass eine Totalreflexion innerhalb der Platte vermieden wird. In der Platte 186 können jedoch auch Partikel integriert sein, um Licht über die senkrecht zu der Seitenfläche 220 ausgerichteten Oberflächen auskoppeln zu können.

In Fig. 24 ist in schematischer Form eine Leuchtenanordnung 10M gezeigt, die beispielhaft eine Mehrzahl von Leuchten 12I sowie eine Leuchte 12L beinhaltet. Ferner beinhaltet die Leuchtenanordnung 10 ein Bediengerät 66K, wie es in Fig. 19 gezeigt ist.

In Fig. 24 ist zunächst zu erkennen, dass bei der Leuchte 12L an einem Ende eines Pendels 206 ein Magnetbefestigungsteil 210 festgelegt ist, das mit einer Haltemagnetanordnung 196L an der Oberseite des Korpus 180L festgelegt ist. An der Oberseite des Korpus 180L kann ferner ein Ein-/Aus-Schalter 200L angeordnet sein.

Mittels des Bediengeräts 66K können, wie es schematisch durch Pfeile 64 angedeutet ist, die Leuchten 12I und 12L synchron angesteuert werden.

In Fig. 24 ist das Bediengerät 66K angeschlossen an ein Standard-Ladekabel 176 gezeigt. Das Bediengerät 66K kann jedoch ebenfalls von einem solchen Ladekabel 176 entkoppelt sein und allein über seine Haltemagnetanordnung 196K (Fig. 19) an einer Wand temporär festgelegt werden.

Die Leuchten 12I, 12L der Fig. 24 sowie das Bediengerät 66K können jeweils von ihrem Ort der temporären Anbringung mittels Magnetbefestigungsteil 210 und Haltemagnetanordnung 196 abgenommen werden und jeweils an einem zentralen Ladeort geladen werden, und zwar über einen Standard-Ladekonverter 178 und eine Mehrzahl von Standard-Ladekabeln 176.

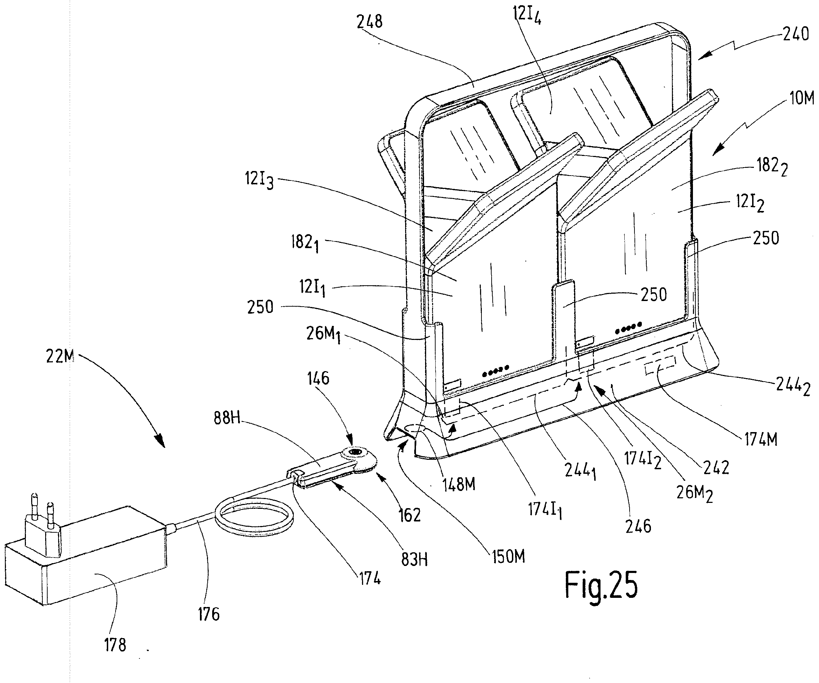

In Fig. 25 ist eine bevorzugte Ausführungsform einer Leuchtenanordnung 10M mit einer Ladeeinrichtung 22M gezeigt, die eine Ladestation 240 aufweist.

Die Ladestation 240 beinhaltet einen Sockel 242, der beispielsweise auf eine ebene Fläche stellbar ist. Ferner sind an einer Oberseite des Sockels 242 eine Mehrzahl (vorliegend vier) Leuchtenaufnahmen 244 zur temporären Aufnahme einer entsprechenden Mehrzahl von Leuchten ausgebildet. Vorliegend ist die Ladestation 240 dazu ausgebildet, Leuchten 12I zu laden, wie sie in Fig. 17 und 18 sowie in Fig. 24 gezeigt sind. Vorzugsweise eignet sich die Ladestation 240 auch zum Aufladen eines Bediengerätes 66K, wie es in Fig. 19 gezeigt ist. Die Ladestation 240 kann jedoch auch so angepasst sein, dass sie zum Aufladen anderer Arten von Leuchten geeignet ist, insbesondere von solchen Leuchten, die als Wand-, Decken- oder Pendelleuchten ausgebildet sind.

Vorliegend sind an dem Sockel 242 vier Leuchtenaufnahmen 244 ausgebildet, die zur Aufnahme von vier Leuchten 12I₁, 12I₂, 12I₃ und 12I₄ jenes Leuchtentyps ausgebildet sind, der in den Fig. 17 und 18 gezeigt ist.

Im Bereich der Leuchtenaufnahmen 244 sind dabei Schnittstellenanordnungen 26M₁, 26M₂, ... ausgebildet, die dazu ausgebildet sind, mit den Schnittstellen 174I₁, 174I₂, ... zusammenzuwirken, die an den Leuchten 12I vorgesehen sind.

Im Inneren des Sockels 242 ist eine Verkabelung 246 vorgesehen, die dazu ausgebildet ist, diese Schnittstellen 174I₁, 174I₂, etc. mit einer zentralen Ladeschnittstelle zu verbinden, die vorliegend durch "Leuchten"-Kontakte 148M an der Oberseite einer bodenseitigen Ausnehmung 150M des Sockels 242 vorgesehen sind.

Die Ausnehmung 150M entspricht hinsichtlich Aufbau und Funktionsweise der Ausnehmung 150, die in den Fig. 11 bis 14 gezeigt ist, dort für den Fuß einer Stehleuchte. Die gleiche Ausnehmung mit den identischen Kontakten 148M ist vorliegend an dem Sockel 242 vorgesehen, so dass das Ladeeinrichtungsgehäuse 83H mit dem Konusansatz 162 in die Ausnehmung 150M geschoben werden kann. Das Ladeeinrichtungsgehäuse 83H ist vorzugsweise identisch aufgebaut wie das Ladeeinrichtungsgehäuse 23H der Fig. 15 und 16.

Demzufolge ist an einem dem Konusansastz 162 gegenüberliegenden Ende des Ladeeinrichtungsgehäuses 83H eine Standard-Schnittstelle 174 vorgesehen, in die ein Stecker eines Standard-Ladekabels 176 eingesteckt werden kann, das am anderen Ende mit einem Standard-Ladekonverter 178 verbunden ist.

Alternativ zu der Ausgestaltung, bei der an der Ladestation 240 eine Ausnehmung 150M zur Aufnahme eines Abschnittes des Ladeeinrichtungsgehäuses 83H ausgebildet ist, könnte an der Ladestation 240 auch eine Standard-Ladeschnittstelle 174M vorgesehen sein, in die ein Stecker des Standard-Ladekabels 176 direkt eingesteckt werden könnte. In diesem Fall würde diese Schnittstelle 174M über eine entsprechende Verkabelung parallel mit den Schnittstellen 174I₁, 174I₂, ... verbunden sein.

Zur mechanischen Fixierung der Leuchten 12I an der Ladestation 240 können Haltestege 250 vorgesehen sein, die sich von dem Sockel 242 ausgehend nach oben erstrecken und einen mechanischen Teil der Leuchtenaufnahmen 244 bilden.

Ferner kann die Ausnehmung 150M an einer beliebigen Stelle im Bereich des Sockels 242 ausgebildet sein. Die Ausnehmung 150M ist jedoch vorzugsweise an einem axialen Ende des Sockels 242 vorgesehen,

Die Axialrichtung des Sockels 242 liegt vorzugsweise parallel zur Korpusvorderseiten 182₁, 182₂, ... der in die Ladestation 240 eingesetzten Leuchten 12I₁, 12I₂, ...

Vorzugsweise weist die Ladestation 240 ferner einen Bügel bzw. Griff 248 auf, der sich U-förmig oberhalb des Sockels 242 erstreckt und mit den axialen Enden des Sockels verbunden ist. Der Bügel 248 ist vorzugsweise länger als die Höhe der in die Ladestation 240 eingesetzten Leuchten 12I, so dass die Ladestation 240 mittels des Bügels 248 auf einfache Weise mit den darin eingesetzten Leuchten 12I getragen werden kann.

Zum Koppeln mit dem Ladeeinrichtungsgehäuse 83H kann die Ladestation 240 dann so bewegt werden, dass die Aufnahme 150M in die Nähe des Konusansatzes 162 gelangt, wo dann aufgrund des Gehäusemagnetteils 168 eine automatische zentrierte Kontaktierung zwischen den Kontakten 146 und 148M erfolgt. Zum Trennen der Ladestation 240 von dem Ladeeinrichtungsgehäuse H kann dann von Hand oder mittels eines Fußes auf die Oberseite 88H des Ladeeinrichtungsgehäuses 83H gedrückt werden, um dieses zu fixieren und ein Abnehmen der Ladestation 240 von dem Ladeeinrichtungsgehäuse 83H zu erleichtern.

## Patentansprüche

1. Leuchtenanordnung (10), insbesondere zur Beleuchtung in oder bei Gebäuden (40), aufweisend eine Ladeeinrichtung (22) zum Aufladen eines Energiespeichers (20) der Leuchtenanordnung (10), die wenigstens eine tragbare Leuchte (12) mit einem Korpus (16) und eine Leuchtmittelanordnung (14) sowie wenigstens einen mit der Leuchte (12) verbundenen und aufladbaren Energiespeicher (20) aufweist, der dazu ausgebildet ist, die Leuchtmittelanordnung (14) der Leuchte (12) mit elektrischem Strom zu versorgen, wobei die Ladeeinrichtung (22) ein flaches Ladeeinrichtungsgehäuse (83) aufweist, das eine auf einen Boden (42) aufsetzbare Unterseite (90), eine Oberseite (88) und eine die Unterseite (90) und die Oberseite (88) verbindende Seitenfläche (92) aufweist, wobei an der Oberseite (88) eine Haltefläche ausgebildet ist und wobei an der Oberseite (88) und/oder an der Seitenfläche (92) eine Lade-Schnittstelle (86; 86H) einer Schnittstellenanordnung (26H) zur trennbaren Verbindung mit dem aufladbaren Energiespeicher (20) angeordnet ist,
**dadurch gekennzeichnet,**
**dass** das Ladeeinrichtungsgehäuse (83H) eine im Wesentlichen quaderförmige Basis (160) aufweist, die an ihrem einen Längsende einen Konusansatz (162) beinhaltet, der einen Gehäusekonus (164) definiert, wobei der Gehäusekonus (164) ausgehend von einer Unterseite des Ladeeinrichtungsgehäuses (83H) konisch zusammenläuft und sich über einen Winkel von größer als 180° und kleiner als 270° erstreckt, wobei der Konusansatz auf seiner Oberseite eine ebene Kreisfläche (166) aufweist, an der ein erster Lade-Kontakt (170) und ein hierzu konzentrischer zweiter Lade-Kontakt (172) ausgebildet sind, wobei der zweite Lade-Kontakt (172) radial beabstandet von dem ersten Lade-Kontakt (170) angeordnet ist.

2. Leuchtenanordnung nach Anspruch 1, **dadurch gekennzeichnet, dass** die ebene Kreisfläche (166) des Konusansatzes (162) gegenüber einer Oberseite der Basis (160) vorsteht.

3. Leuchtenanordnung nach Anspruch 1 oder 2, wobei an dem Ladeeinrichtungsgehäuse (83H) eine Standard-Schnittstelle (174) ausgebildet ist, über die eine elektrische Ladegleichspannung bereitstellbar ist, und wobei die elektrische Standard-Schnittstelle (174) in dem Ladeeinrichtungsgehäuse (83H) elektrisch mit Lade-Kontakten (170, 172) an der Außenseite des Ladeeinrichtungsgehäuses (83H) verbunden ist, die mit Leuchten-Kontakten (148) an einem Korpus (16H) der Leuchte (12H) elektrisch verbindbar sind.

4. Leuchtenanordnung, nach einem der Ansprüche 1 bis 3, mit einer Ladestation (240), an der eine Mehrzahl von Leuchten (12I) temporär festlegbar ist und die eine der Mehrzahl von Leuchten entsprechende Mehrzahl von Schnittstellen zum gleichzeitigen Laden von Energiespeichern (20I) der aufgenommenen Leuchten (12I) aufweist.

5. Leuchtenanordnung nach einem der Ansprüche 1 bis 4, wobei der Energiespeicher (20) mittels der Schnittstellenanordnung (26) an die Ladeeinrichtung (22) anschließbar ist, um den Energiespeicher (20) aufzuladen und/oder um die Leuchtmittelanordnung (14) mit Strom zu versorgen, und von der Ladeeinrichtung (22) trennbar ist, um die Leuchte (12) bedarfsweise an einen beliebigen zu beleuchtenden Ort (BP) zu tragen.

6. Leuchtenanordnung nach einem der Ansprüche 1 bis 5, **dadurch gekennzeichnet, dass** die Schnittstellenanordnung (26) eine elektrische Verbindungsanordnung (82) aufweist, wobei die Verbindungsanordnung (82H) magnetisch in einer Verbindungsposition gehalten wird, so dass ein Trennen der Verbindungsanordnung erleichtert ist.

7. Leuchtenanordnung nach einem der Ansprüche 1 bis 6, mit einer Mehrzahl von tragbaren Leuchten (12), die jeweils eine Steueranordnung (18) aufweisen, wobei die Steueranordnungen (18) jeweils eine drahtlose Kommunikationseinrichtung (36) aufweisen, die so miteinander kommunizieren können, dass die Leuchten (12) gemeinsam geschaltet werden können.

8. Leuchtenanordnung nach einem der Ansprüche 1 bis 7, wobei der Korpus (16H) der Leuchte (12H) eine Lagerebene (142) definiert und wobei die Schnittstellenanordnung (26H) eine elektrische Verbindungsanordnung (82H) mit einer Verbindungsachse (144) aufweist, die quer zu der Lagerebene (142) ausgerichtet ist, wobei der Korpus (16H) der Leuchte (12H) vorzugsweise eine Ausnehmung (150) aufweist, in die zumindest ein Abschnitt eines Ladeeinrichtungsgehäuses (83H) einführbar ist, wobei die Form der Ausnehmung (150) und die Form des Ladeeinrichtungsgehäuses (83H) so aufeinander abgestimmt sind, dass das Ladeeinrichtungsgehäuse (83H) gegenüber dem Korpus (16H) der Leuchte (12H) parallel zu der Lagerebene (142) um einen Winkel (156) verschwenkbar ist, der in einem Bereich von 10° bis 90° liegt.

9. Leuchtenanordnung nach einem der Ansprüche 1 bis 8, wobei die elektrische Verbindungsanordnung (82H) zwei konzentrische Lade-Kontakte (146: 170, 172) an dem Ladeeinrichtungsgehäuse (83H) zur elektrischen Kontaktierung von zwei konzentrischen Leuchten-Kontakten (150) an dem Korpus (16H) der Leuchte (12H) aufweist.

## Claims

1. A luminaire arrangement (10), in particular for providing lighting in or near buildings (40), comprising a charging device (22) for charging an energy store (20) of the luminaire arrangement (10), which comprises at least one portable luminaire (12), which has a body (16) and a lamp arrangement (14), as well as at least one energy store (20) which is connected to the luminaire (12), is rechargeable, and is designed to supply electrical power to the lamp arrangement (14) of the luminaire (12), wherein the charging device (22) comprises a flat charging device housing (83), which has an underside (90), which can be set down on a floor (42), an upper side (88), and a side face (92) connecting the underside (90) and the upper side (88), wherein a holding surface is formed on the upper side (88) and wherein a charging interface (86; 86H) of an interface arrangement (26H) is arranged on the upper side (88) and/or on the side face (92) for releasable connection to the rechargeable energy store (20),
**characterized in that**
the charging device housing (83H) has a substantially cuboid base (160) which has at its one longitudinal end a conical base (162) that defines a housing cone (164), wherein the housing cone (164) tapers conically starting from an underside of the charging device housing (83H) and extends over an angle which is larger than 180° and smaller than 270°, wherein the conical base has a flat circular area (166) on its upper side, on which a first charging contact (170) and a second charging contact (172), which is concentric to the first, are formed, wherein the second charging contact (172) is arranged at a radial distance from the first charging contact (170).

2. The luminaire arrangement as claimed in claim 1, **characterized in that** the flat circular area (166) of the conical base (162) projects with respect to an upper side of the base (160).

3. The luminaire arrangement as claimed in claim 1 or 2, wherein a standard interface (174) is formed on the charging device housing (83H), via which an electrical charging DC voltage can be provided, and wherein the electrical standard interface (174) in the charging device housing (83H) is electrically connected to charging contacts (170, 172) on the outer side of the charging device housing (83H), the charging contacts being electrically connectable to luminaire contacts (148) on a body (16H) of the luminaire (12H).

4. The luminaire arrangement as claimed in any of the claims 1 to 3, having a charging station (240), to which a plurality of luminaires (12I) can be fixed temporarily and which has a plurality of interfaces, corresponding to the plurality of luminaires, for simultaneously charging energy stores (201) of the received luminaires (12I).

5. The luminaire arrangement as claimed in any of the claims 1 to 4, wherein the energy store (20) can be attached by means of the interface arrangement (26) to the charging device (22) in order to recharge the energy store (20) and/or in order to supply power to the lamp arrangement (14), and can be separated from the charging device (22) in order to take the luminaire (12) as necessary to any target location (BP) to be lit.

6. The luminaire arrangement as claimed in any one of the claims 1 to 5, **characterized in that** the interface arrangement (26) includes an electrical connection arrangement (82), the connection arrangement (82H) being held magnetically in a connection position, such that a separation of the connection arrangement is facilitated.

7. The luminaire arrangement as claimed in any one of claims 1 to 6, comprising a plurality of portable luminaires (12), which each have a control arrangement (18), each control arrangement (18) including a wireless communications device (36), which communications devices can communicate with one another such that the luminaires (12) can be switched jointly.

8. The luminaire arrangement as claimed in any one of claims 1 to 7, wherein the body (16H) of the luminaire (12H) defines a supporting plane (142) and the interface arrangement (26H) has an electrical connection arrangement (82H) with a connection axis (144) which is oriented transversely to the supporting plane (142), wherein the body (16H) of the luminaire (12H) preferably has a recess (150), in which at least a portion of a charging device housing (83H) can be inserted, the shape of the recess (150) and the shape of the charging device housing (83H) being coordinated with one another such that the charging device housing (83H) can be pivoted relative to the body (16H) of the luminaire (12H) parallel to the supporting plane (142) by an angle (156) which lies in a range of from 10° to 90°.

9. The luminaire arrangement as claimed in any one of the claims 1 to 8, wherein the electrical connection arrangement (82H) has two concentric charging contacts (146; 170, 172) on the charging device housing (83H) for electrically contacting two concentric luminaire contacts (150) on the body (16H) of the luminaire (12H).

## Revendications

1. Agencement d'éclairage (10), en particulier pour l'éclairage dans ou sur des bâtiments (40), présentant un dispositif de charge (22) pour recharger un accumulateur d'énergie (20) de l'agencement d'éclairage (10) qui présente au moins un luminaire portable (12) avec un corps (16) et un agencement de moyens d'éclairage (14) ainsi qu'au moins un accumulateur d'énergie rechargeable (20) connecté au luminaire (12), qui est conçu pour alimenter l'agencement de moyens d'éclairage (14) du luminaire (12) en courant électrique, le dispositif de charge (22) présentant un boîtier de dispositif de charge (83) plat qui présente une face inférieure (90) pouvant être posée sur un sol (42), une face supérieure (88) et une surface latérale (92) reliant la face inférieure (90) et la face supérieure (88), une surface de maintien étant formée sur la face supérieure (88) et une interface de charge (86 ; 86H) d'un agencement d'interface (26H) étant disposée sur la face supérieure (88) et/ou sur la surface latérale (92) pour la liaison séparable à l'accumulateur d'énergie rechargeable (20),
**caractérisé en ce**
**que** le boîtier de dispositif de charge (83H) présente une base (160) sensiblement parallélépipédique qui comprend un embout conique (162) à sa première extrémité longitudinale, lequel embout conique définit un cône de boîtier (164), lequel cône de boîtier (164) converge de manière conique à partir d'une face inférieure du boîtier de dispositif de charge (83H) et s'étend sur un angle supérieur à 180° et inférieur à 270°, l'embout conique présentant sur sa face supérieure une surface circulaire plane (166) sur laquelle sont formés un premier contact de charge (170) et un deuxième contact de charge (172) concentrique à celui-ci, le deuxième contact de charge (172) étant disposé à distance radiale du premier contact de charge (170).

2. Agencement d'éclairage selon la revendication 1, **caractérisé en ce que** la surface circulaire plane (166) de l'embout conique (162) fait saillie d'une face supérieure de la base (160).

3. Agencement d'éclairage selon la revendication 1 ou 2, dans lequel une interface standard (174) est formée sur le boîtier de dispositif de charge (83H), par l'intermédiaire de laquelle une tension électrique continue de charge peut être fournie, et dans lequel l'interface électrique standard (174) dans le boîtier de dispositif de charge (83H) est connectée électriquement à des contacts de charge (170, 172) sur le côté extérieur du boîtier de dispositif de charge (83H), lesquels peuvent être connectés électriquement à des contacts de luminaire (148) sur un corps (16H) du luminaire (12H).

4. Agencement d'éclairage selon l'une des revendications 1 à 3, comprenant une station de charge (240) à laquelle une pluralité de luminaires (12I) peuvent être temporairement fixés et qui présente une pluralité d'interfaces correspondant à la pluralité de luminaires pour charger simultanément les accumulateurs d'énergie (20I) des luminaires (12I) reçus.

5. Agencement d'éclairage selon l'une des revendications 1 à 4, dans lequel l'accumulateur d'énergie (20) peut être connecté au dispositif de charge (22) au moyen de l'agencement d'interface (26) pour recharger l'accumulateur d'énergie (20) et/ou pour alimenter en courant l'agencement de moyens d'éclairage (14), et peut être séparé du dispositif de charge (22) pour transporter, en cas de besoin, le luminaire (12) à un endroit quelconque à éclairer (BP).

6. Agencement d'éclairage selon l'une des revendications 1 à 5, **caractérisé en ce que** l'agencement d'interface (26) présente un agencement de connexion électrique (82), l'agencement de connexion (82H) étant maintenu magnétiquement dans une position de connexion afin de faciliter une séparation de l'agencement de connexion.

7. Agencement d'éclairage selon l'une des revendications 1 à 6, comprenant une pluralité de luminaires portables (12) qui présentent chacun un agencement de commande (18), les agencements de commande (18) présentant chacun un dispositif de communication sans fil (36), lesquels sont capables de communiquer entre eux de telle sorte que les luminaires (12) peuvent être commutés ensemble.

8. Agencement d'éclairage selon l'une des revendications 1 à 7, dans lequel le corps (16H) du luminaire (12H) définit un plan de support (142) et dans lequel l'agencement d'interface (26H) présente un agencement de connexion électrique (82H) avec un axe de connexion (144) qui est orienté transversalement au plan de support (142), le corps (16H) du luminaire (12H) présentant de préférence un évidement (150) dans lequel au moins une partie d'un boîtier de dispositif de charge (83H) peut être introduite, la forme de l'évidement (150) et la forme du boîtier de dispositif de charge (83H) étant adaptées l'une à l'autre de telle sorte que le boîtier de dispositif de charge (83H) peut être pivoté par rapport au corps (16H) du luminaire (12H) parallèlement au plan de support (142) d'un angle (156) qui se situe dans une plage de 10° à 90°.

9. Agencement d'éclairage selon l'une des revendications 1 à 8, dans lequel l'agencement de connexion électrique (82H) présente deux contacts de charge concentriques (146 ; 170, 172) sur le boîtier de dispositif de charge (83H) pour la mise en contact électrique avec deux contacts de luminaire concentriques (150) sur le corps (16H) du luminaire (12H).
